# EUROPEAN PATENT APPLICATION

(11) **EP 4 575 588 A1**
(43) Date of publication of application: **25.06.2025**
(21) Application number: 23219848.1
(22) Date of filing: 22.12.2023
(51) Int. Cl.: G01V 3/08

(54) **LARGE SCALE MAGNETIC TRACKING**

(71) Applicant: Advanced Magnetic Interaction, AMI, 38170 Seyssinet-Pariset (FR)
(72) Inventor: Hautson, Tristan, 38170 Seyssinet-Pariset (FR); Barjean, Kinia, 38170 Seyssinet-Pariset (FR); Pellerano, Vincent, 38170 Seyssinet-Pariset (FR); Saladin, Joris, 38170 Seyssinet-Pariset (FR)
(74) Representative: Peterreins Schley

(57) **Abstract**

An assembly (10) for tracking and/or determining a location of at least one magnetic object (20) comprises a processing circuit board (110), at least one connecting circuit board (120), and at least one sensing circuit board (130) comprising at least one magnetometer (140). The at least one connecting circuit board (120) is mechanically and communicatively coupled with the processing circuit board (110), and the at least one sensing circuit board (130) is mechanically and communicatively coupled with the at least one connecting circuit board (120).

## Description

### TECHNICAL FIELD

The present disclosure relates to the technical field of determining and/or tracking a location of passive accessories, more specifically to an assembly and a system for tracking and/or determining a location of at least one magnetic object, to a method of assembling the assembly and the system, and to a method for tracking and/or determining a location of at least one magnetic object.

### BACKGROUND

In the technical field of location determination and/or tracking of a device held or worn by user (i.e., a user-borne device), the provision of a plurality of magnetometers allows to measure a magnetic field associated with a magnetic object which may be arranged in or coupled to the user-borne device. The user-borne devices using this technology may be electronically and/or electrically passive. More specifically, electrically passive means that the user-borne device may not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device. The magnetometer measurements enable determining and/or tracking of the location of the magnetic object within a sensing volume (and/or area) created by the plurality of magnetometers. In some applications, the magnetic object may be arranged within a writing device (e.g., a stylus) which may be operated by a user on a writing support during a user operation. Based on the magnetic field measurements associated with the magnetic object, a location of the writing device on the writing support may be determined.

The determination and/or tracking of a location of at least one magnetic object with a plurality of magnetometers may be provided in at least five degrees of freedom. Some applications, like the writing device embodiment as described above, may require a sensing area in the size of a sheet of paper and a corresponding sensing volume (e.g., an elliptical volume in which a sheet of paper fits). Furthermore, assemblies and systems for determination and/or tracking of a location of at least one magnetic object usually comprise a single printed circuit board assembly (PCBA) wherein all components required for tracking and/or determining the location of the at least one magnetic object are mounted on the single printed circuit board (PCB). However, some applications may require a larger sensing volume (or area), e.g., larger than the size of the sheet of paper and the associated volume, or a sensing volume that should be adapted to certain applications and arrangements. In case a larger sensing volume (and/or area) is required, the assemblies and systems with a single PCBA have to be provided in a larger format. However, extending the size of a single PCBA may lead to increased costs, higher complexity in manufacture and poor applicability.

Thus, the object of the present disclosure is to provide an improved assembly, system and/or method for tracking and/or determining a location of at least one magnetic object, and more specifically which can provide an enlarged and/or application-oriented sensing volume (and/or area) in a simplified manner.

### SUMMARY

The present disclosure relates to an assembly for tracking and/or determining a location of at least one magnetic object as defined in claim 1 and a system for tracking and/or determining a location of at least one magnetic object as defined in claim 8. Furthermore, the present disclosure relates to a method of assembling an assembly for tracking and/or determining a location of at least one magnetic object as defined in claim 12. In addition, the present disclosure relates to a method, more specifically a computer-implemented method, for tracking and/or determining a location of at least one magnetic object as defined in claim 13. The dependent claims depict advantageous embodiments of the present disclosure.

According to a first aspect of the present disclosure, an assembly for tracking and/or determining a location of at least one magnetic object comprises a processing circuit board, at least one connecting circuit board, and at least one sensing circuit board comprising at least one magnetometer. The at least one connecting circuit board is mechanically and communicatively coupled with the processing circuit board. The at least one sensing circuit board is mechanically and communicatively coupled with the at least one connecting circuit board.

The assembly according to the first aspect of the present disclosure provides a modular structure with individual circuit boards forming individual modules that can be coupled with each other.

Required components (e.g., the magnetometers) may be provided on the individual circuit boards. In case a larger sensing volume (and/or area) should be provided for some applications, additional modules (e.g., sensing circuit boards and/or connecting circuit boards) can be easily coupled with the already existing modules (i.e., the circuit boards). Instead of using a single PCBA in enlarged format to extend the sensing volume (and/or area), the modular structure of the assembly may be simply adapted and extended. Thereby, a flexible and customizable architecture of the assembly can be provided, manufacturing costs can be reduced, an applicability can be improved, and the assembly can be simplified. In an example, sensing circuit boards and/or connecting circuit boards can be added to or removed from the assembly and/or system without changing the entire architecture. Thus, a scalable assembly can be provided and a faster adaption and/or initialization of separate sensing areas can be achieved. The at least one magnetometer may be configured to create a sensing volume. The processing circuit board may be configured to receive the magnetic field measurements measured with the at least one magnetometer via the at least one connecting circuit board. The processing circuit board, the connecting circuit board and/or the sensing circuit board may comprise a rectangular, flat shape.

According to a second aspect of the present disclosure, a system for tracking and/or determining a location of at least one magnetic object may comprise a first assembly for tracking and/or determining a location of at least one magnetic object and at least one second assembly for tracking and/or determining a location of at least one magnetic object. At least one of the first assembly and the at least one second assembly may be an assembly according to the first aspect of the present disclosure. In some embodiments, each of the first assembly and the at least one second assembly may be an assembly according to the first aspect of the present disclosure. The first assembly and the at least one second assembly may be (at least) communicatively coupled with each other. The above-described effects and advantages for the assembly may apply analogously to the system. In case a larger sensing volume (and/or area) should be provided for some applications, additional modules (e.g., sensing circuit boards and/or connecting circuit boards) and/or assemblies can be easily coupled with the already existing modules (i.e., the circuit boards) and/or assemblies. Thereby, a flexible and customizable architecture of the system can be provided, manufacturing costs can be reduced, an applicability can be improved, and the system can be simplified. For example, assemblies according to the first aspect of the present disclosure can be added to or removed from the system without changing the entire architecture. Thus, a scalable system can be provided and a faster adaption and/or initialization of separate sensing areas can be achieved.

According to a third aspect of the present disclosure, a method of assembling an assembly for tracking and/or determining a location of at least one magnetic object, more specifically of the assembly according to the first aspect of the present disclosure, comprises:
a) providing a processing circuit board, at least one connecting circuit board, and at least one sensing circuit board comprising at least one magnetometer,
b) coupling, mechanically and communicatively, the at least one connecting circuit board with the processing circuit board, and
c) coupling, mechanically and communicatively, the at least one sensing circuit board (130) with the at least one connecting circuit board.

Steps b) and c) can also be carried out the other way round. The above-described effects and advantages for the assembly may apply analogously to the method. The method may allow for flexible and customizable assembling of the assembly. Furthermore, manufacturing costs can be reduced, an applicability can be improved, and the assembly can be simplified.

According to a fourth aspect of the present disclosure, a method of assembling a system for tracking and/or determining a location of at least one magnetic object, more specifically of the system according to the second aspect of the present disclosure, comprises:
a) providing a first assembly for tracking and/or determining a location of at least one magnetic object,
b) providing at least one second assembly for tracking and/or determining a location of at least one magnetic object, and
c) coupling the first assembly with the at least one second assembly.

At least one of the first assembly and the at least one second assembly may be assembled by a method according to the third aspect of the present disclosure. At least one of the first assembly and the at least one second assembly may be an assembly according to the first aspect of the present disclosure. Steps b) and c) can also be carried out the other way round. The above-described effects and advantages for the system and assembly may apply analogously to the method. The method may allow for flexible and customizable assembling of the system.

Furthermore, manufacturing costs can be reduced, an applicability can be improved, and the system can be simplified.

According to a fifth aspect of the present disclosure, a method for tracking and/or determining a location of at least one magnetic object comprises:
- collecting first magnetic field measurements associated with a magnetic field created by at least one magnetic object with a first assembly for tracking and/or determining a location of at least one magnetic object,
- collecting second magnetic field measurements associated with the magnetic field created by the at least one magnetic object with at least one second assembly for tracking and/or determining a location of at least one magnetic object, more specifically wherein at least one of the first assembly and the at least one second assembly is an assembly according to the first aspect of the present disclosure,
- exchanging the collected magnetic field measurements between the first assembly and the at least one second assembly, and
- determining, with at least one of the first assembly and the at least one second assembly, a location of the at least one magnetic object based on the first and second collected magnetic field measurements.

The above-described effects and advantages for the system and assembly may apply analogously to the method. In embodiments, each of the first assembly and the at least one second assembly may be an assembly according to the first aspect of the present disclosure. In embodiments, the first assembly and the at least one second assembly may be of (or comprised with) a system for tracking and/or determining a location of at least one magnetic object, more specifically of (or comprised with) a system according to the second aspect of the present disclosure. Each of the assemblies may comprise at least one processing unit. At least one processing unit may be configured to execute the method (or steps of the method). The first magnetic field measurements may be generated with at least one first sensing circuit board comprising at least one first magnetometer of the first assembly. The first magnetic field measurements may be collected with a first processing circuit board comprising at least one first processing unit of the first assembly. The second magnetic field measurements may be generated with at least one second sensing circuit board comprising at least one second magnetometer of the at least one second assembly. The second magnetic field measurements may be collected with a second processing circuit board comprising at least one second processing unit of the at least one second assembly. At least one of the first and second processing units may be configured to determine the location of the at least one magnetic object. In some embodiments, only one of the first and second processing units may be configured to compute location data of the at least one magnetic object. Exchanging the collected magnetic field measurements may comprise the exchange or be in the form of (raw, i.e. non-processed) magnetic field measurements, magnetic field measurement data (e.g., processed magnetic field measurements), and/or magnetic object location data (which may be determined based on the magnetic field measurements).

The method may provide an improved tracking and/or determination of a location of at least one magnetic object of a system according to the second aspect of the present disclosure. Based on the method as defined above, an error in magnetic object location determination, in particular when the at least one magnetic object moves from the first assembly to the at least one second assembly, can be reduced. Thus, an improved method for a system comprising a modular structure as defined for the second aspect of the present disclosure may be provided. The respective assemblies can share magnetic field measurements (and associated data) and/or determined magnetic object location data (which may be determined based on the magnetic field measurements) to determine a location of the magnetic object with increased accuracy, even during transition from the first assembly to the second assembly (especially in an edge area of the respective assemblies). A signal to noise ratio during measuring with the magnetometers, which can occur when the at least one magnetic object is operated in the edge area of the respective assembly, can be increased thus leading to increased accuracy. Furthermore, since the respective assemblies already receive the magnetic object location data from the respective other assembly, a time required for tracking the at least one magnetic object may be reduced. By exchanging the magnetic field measurements and/or magnetic object location data between the assemblies, a sensing volume (and/or area) may be easily extended.

The method may be a computer-implemented method. Further aspects of the present disclosure relate to a computer system configured to execute the computer-implemented method, a computer program configured to execute the computer-implemented method and/or a computer-readable medium or signal storing the computer program.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: is a schematic view of an assembly for tracking and/or determining a location of at least one magnetic object according to aspects of the present disclosure with at least one magnetic object operated within a sensing volume;
- **Fig. 2**: is a schematic top view of a first embodiment of the assembly;
- **Fig. 3**: is a schematic top view of a second embodiment of the assembly;
- **Fig. 4**: is a schematic top view of a third embodiment of the assembly;
- **Fig. 5**: is a schematic top view of a fourth embodiment of the assembly;
- **Figs. 6A and 6B**: are schematic top views of a system for tracking and/or determining a location of at least one magnetic object according to aspects of the present disclosure;
- **Fig. 7**: is a schematic top view of the system according to an embodiment of the present disclosure, wherein at least one magnetic object transitions from a first assembly to at least one second assembly;
- **Fig. 8**: is a graph showing an error in tracking and/or location determination of a system as illustrated in Fig. 7 over time;
- **Figs. 9A to 9E**: are schematic top views of the system with various embodiments of processing units communicatively coupled with each other;
- **Fig. 10**: is a schematic perspective view of the system having first and second assemblies coupled with each other and a calibration device;
- **Fig. 11**: is a schematic view of a process flow diagram of a method for tracking and/or determining a location of at least one magnetic object according to aspects of the present disclosure;
- **Figs. 12A and 12B**: are schematic views of process flow diagrams for method(s) of assembling an assembly and a system according to aspects of the present disclosure.

### DETAILED DESCRIPTION

Embodiments of the assembly, the system, the assembly methods and the method for tracking and/or determining a location of at least one magnetic object according to the present disclosure will be described in reference to the drawings as follows.

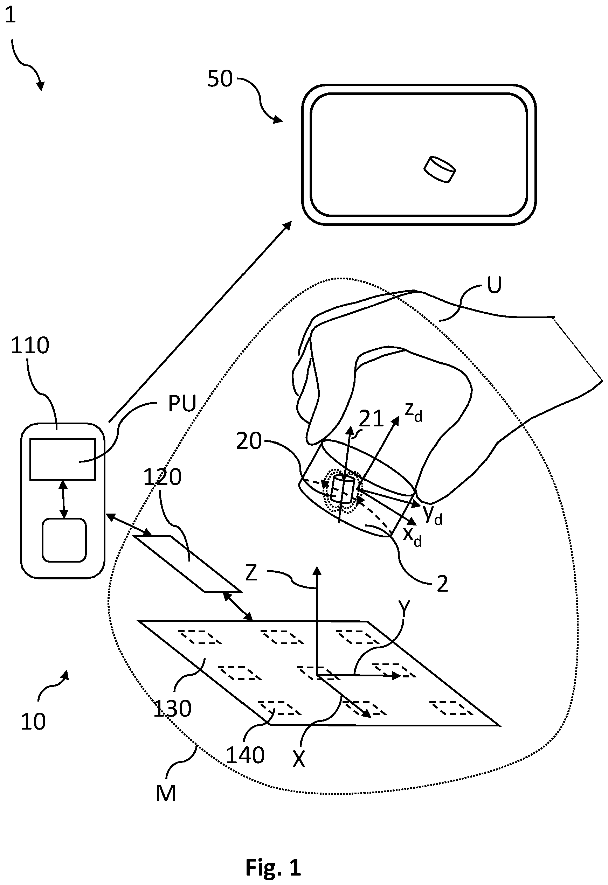

Fig. 1 is a schematic view of a system 1 and an assembly 10 for tracking and/or determining a location of at least one magnetic object 20 according to aspects of the present disclosure. At least one magnetic object 20 is operated within a sensing volume M and/or area.

According to a first aspect of the present disclosure, the assembly 10 for tracking and/or determining a location of at least one magnetic object 20 comprises a processing circuit board 110, at least one connecting circuit board 120, and at least one sensing circuit board 130 comprising at least one magnetometer 140. The at least one connecting circuit board 120 is mechanically and communicatively coupled with the processing circuit board 110. The at least one sensing circuit board 130 is mechanically and communicatively coupled with the at least one connecting circuit board 120.

The assembly 10 according to the first aspect of the present disclosure provides a modular structure with individual circuit boards forming individual modules that can be coupled with each other. Required components (e.g., the magnetometers) may be provided on the individual circuit boards. In case a larger sensing volume (and/or area) should be provided for some applications, additional modules (e.g., sensing circuit boards and/or connecting circuit boards) can be easily coupled with the already existing modules (i.e., the circuit boards). Instead of using a single PCBA in an enlarged format to extend the sensing volume (and/or area), the modular structure of the assembly 10 may be simply adapted and extended. Thereby, a flexible and customizable architecture of the assembly 10 can be provided, manufacturing costs can be reduced, an applicability can be improved, and the assembly 10 can be simplified. In an example, sensing circuit boards 130 and/or connecting circuit boards 120 can be added to or removed from the assembly 10 without changing the entire architecture. Thus, a scalable assembly 10 can be provided and a faster adaption and/or initialization of separate sensing areas can be achieved. The at least one magnetometer 140 may be configured to create a sensing volume M. The processing circuit board 110 may be configured to receive the magnetic field measurements measured with the at least one magnetometer via the at least one connecting circuit board 120. The processing circuit board 110, the at least one connecting circuit board 120 and/or the at least one sensing circuit board 130 may comprise a rectangular shape, more specifically a rectangular, flat shape.

As shown in Fig. 1, a user-borne device 2 may be coupled with or comprise the at least one magnetic object 20. The user-borne device 2 may be electrically and/or electronically passive. Electrically passive means that the user-borne device 2 may not comprise a power source (e.g., batteries) and/or means to receive power (e.g., wireless power transmission via an inductive coil) for powering a feature (e.g., an electronic feature) of the user-borne device 2. Electronically passive means that no computation or processing occurs (or happens) on the user-borne device 2. However, in some embodiments, the user-borne device 2 may still comprise electronic features such as light emitters.

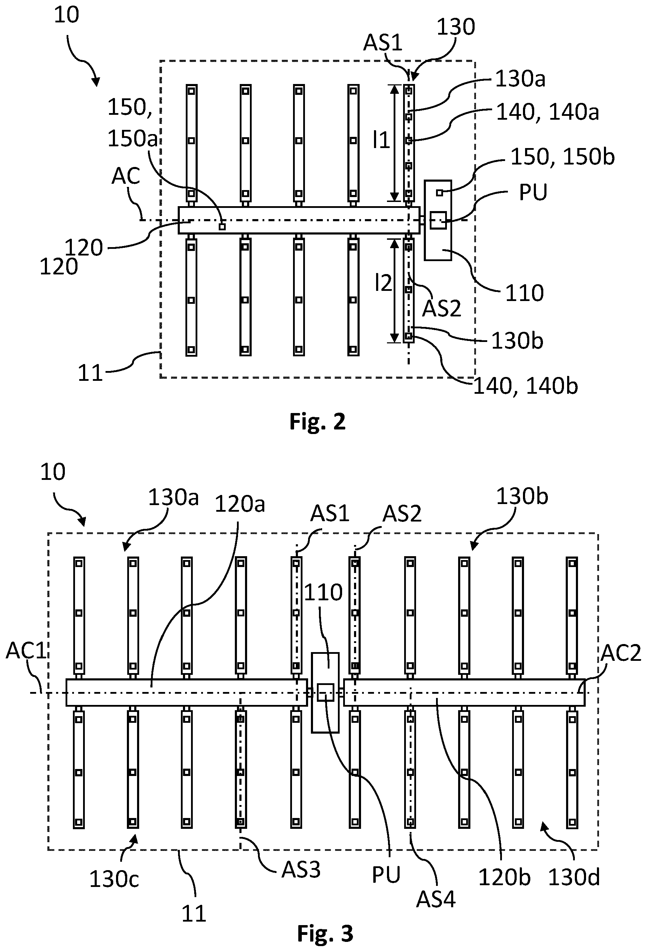

In embodiments, the assembly may comprise at least one additional magnetometer 150 which will be described with reference to Figs. 2 to 5 below. In some embodiments, the assembly 10 may comprise plurality of magnetometers 140 and/or a plurality of additional magnetometers 150. The at least one magnetometer 140, 150 may be configured to measure a magnetic field created by the at least one magnetic object 20. In more detail, the at least one magnetometer 140, 150 may be configured to generate magnetic field measurements of the magnetic field created by the at least one magnetic object 20. The term "magnetic object" may refer to an object which may comprise components of or may be made of magnetic material, i.e., a material that has magnetic properties measurable by the at least one magnetometer 140, 150. The user-borne device 2 and/or the magnetic object 20 may be mobile, i.e., freely movable within a reference coordinate system XYZ defined by the assembly 10 (see, e.g., Fig. 1). In other words, during a user operation (i.e., an operation wherein the user-borne device 2 and/or the magnetic object 20 is operated by a user), the location of the at least one magnetic object 20 within the sensing volume M and/or relative to an interaction surface (i.e., a surface on which the user-borne device 2 and/or the magnetic object 20 may be operated) may be manipulated by a user within the sensing volume M.

The assembly 10 and/or system 1 may allow the tracking and/or location determination of at least one magnetic object 20, which may be coupled to or comprised with the user-borne device 2, more specifically an electronically and/or electrically user-borne device 2, in at least five degrees of freedom. The at least one magnetometer 140, 150 may be configured to create the sensing volume M and/or area (as indicated, e.g., in Fig. 1). The sensing volume may have an ellipsoidal form. As indicated, e.g., in Fig. 1, the assembly 10 may comprise a reference coordinate system XYZ, which may be defined relative to the at least one sensing circuit board 130 or relative to the processing circuit board 120. In some embodiments, the reference coordinate system may be defined with respect to the at least one magnetometer 140, 150. The reference coordinate system XYZ may comprise a first reference axis X, a second reference axis Y and a vertical reference axis Z. The first reference axis X and the second reference axis Y may be orthogonal with respect to each other. The vertical reference axis Z may be orthogonal to the first reference axis X and the second reference axis Y. In embodiments, the first reference axis X and the second reference axis Y may be defined on a surface of the least one sensing circuit board 130.

Each magnetometer 140, 150 may be configured to measure the magnetic field created by the at least one magnetic object 20 in the direction of the first reference axis X, the second reference axis Y, and/or the vertical reference axis Z. In other words, each magnetometer 140, 150 may be configured to perform magnetic field measurements in the direction of one axis (i.e., one dimension), two axes (i.e., two dimensions), or three axes (i.e., three dimensions). The number of magnetometers provided may depend on the desired size of the sensing volume M and/or area within which at least one magnetic object 20 is operated. The at least one magnetometer 140, 150 may be configured to collect magnetic field measurements associated with the magnetic object 20 within the sensing volume M up to a maximum measurement distance, wherein the maximum measurement distance may be a distance within which the magnetic field measurements can be provided with acceptable reliability and/or accuracy. In embodiments, the maximum measurement distance may be 18cm, more specifically 15cm. During a user operation, the at least one magnetic object 20 may be operated within the maximum measurement distance. In other words, the minimum magnetic field generated by at least one magnetic object 20 that may be tracked with the assembly 10 and/or system 1 may comprise at least 1 micro tesla, e.g., which may be provided within the distance as mentioned above.

The embodiments described herein for the at least one magnetic object 20 may also apply for additional magnetic objects. The magnetic object 20 may be a permanent magnet. In embodiments, the magnetic object 20 may be configured to generate a non-zero magnetic field. It may comprise a paramagnetic or diamagnetic material. In embodiments, the magnetic object may comprise a ferromagnetic material or a ferrimagnetic material. The magnetic object 20 may be configured to create or generate a symmetric magnetic field, more specifically wherein the magnetic field may be rotationally symmetric. A rotation of the magnetic object 20 may thus be detectable about a first rotation axis and a second rotation axis of the magnetic object, more specifically wherein the first rotation axis may be perpendicular to the second rotation axis. However, a rotation about a third rotation axis (being perpendicular to the first rotation axis and the second rotation axis) may not be detectable since the magnetic field may be rotationally symmetric. The magnetic object may be axially magnetized in this case (see, e.g., magnetization axis or magnetic object moment vector 21 in Fig. 1). However, in some embodiments, the magnetic object 20 may comprise a magnetization axis being at an orientation with respect to the magnetic object 20 such that a rotation of the magnetic field may be detectable about a first rotation axis, a second rotation axis and a third rotation axis of the magnetic object 20. In this case the magnetic object 20 may be configured to create or generate an asymmetric magnetic field, more specifically wherein the magnetic field may be rotationally asymmetric. This may be the case for a magnetic object 20 being width magnetized or thickness magnetized.

The user-borne device 2 may be a computer mouse, a keyboard, a toy, a stylus, a writing and/or drawing device (e.g., a pen), a marker or a dial. The user-borne device 2 may be operable on an interaction surface (not shown in Fig. 1). The assembly 10 and/or system 1 may be configured to track a movement of the user-borne device 2 based on determining a location of the at least one magnetic object 20 (and an associated user-borne device location).

Referring to Fig. 1, the user-borne device 100 may comprise a device coordinate system. The device coordinate system may comprise the first device axis x_{d}, the second device axis y_{d} orthogonal to the first device axis x_{d}, and a vertical device axis z_{d}. The vertical device axis z_{d} may be orthogonal to a device contact surface or point and/or orthogonal to a plane defined by the first device axis x_{d} and the second device axis y_{d}. The device contact surface or point may be the part of the user-borne device 2 which, during a user operation, may be in contact with an interaction surface (i.e., the surface on which the user-borne device may be operated in some embodiments). In some examples, the user-borne device may be a computer mouse. In other examples, the user-borne device 2 may comprise a contact point (e.g., a stylus or other writing device comprising a writing tip with a nib which contacts an interaction surface during a writing operation). In some examples, the user-borne device 2 may be an erasing device or a writing device having an erasing feature. In this example, the user-borne device 2 may comprise contact surface (e.g., the erasing feature) and/or contact point (e.g., the nib). In other examples, the user-borne device may be operated within a sensing volume M but not on the interaction surface (i.e., in the air). In this case, the user-borne device 100 may be used, e.g., as a pointer. In some embodiments, the device coordinate system may be defined within a geometric center of the user-borne device 2.

Figs. 2 to 5 are schematic top views of embodiments of the assembly 10 according to aspects of the present disclosure. The features and aspects of respective embodiments described below may be combined with each other.

The assembly 10 may comprise a housing 11 that is accommodating the processing circuit board 110, the at least one connecting circuit board 120 and the at least one sensing circuit board 130. In some embodiments, the housing 11 may be or may comprise a furniture (e.g., a table), an electronics device (e.g., a notebook, a laptop, or a tablet), a screen, a wall, a presentation board, a whiteboard, a paper board, a trackpad, or a touchpad. In some embodiments, the housing 11 may comprise a flexible or a rigid material. The housing 11 may comprise coupling means (e.g., non-positive or friction fit coupling means, and/or positive coupling means) configured to couple the housing 11 to another device.

As shown in Figs. 2 to 5, the at least one sensing circuit board 130 may be mechanically and communicatively coupled with the processing circuit board 110 via the at least one connecting circuit board 120. Each of the processing circuit board 110, the at least one connecting circuit board 120 and the at least one sensing circuit board 130 may be provided as a separate circuit board, more specifically mechanically and communicatively coupled with each other. Each of the processing circuit board 110, the at least one connecting circuit board 120 and the at least one sensing circuit board 130 may comprise a printed circuit board (PCB). In more detail, each of the processing circuit board 110, the at least one connecting circuit board 120 and the at least one sensing circuit board 130 may be provided as a separate PCB relative to the other ones of the respective circuit boards.

In embodiments, the processing circuit board 110, the at least one connecting circuit board 120 and the at least one sensing circuit board 130 may comprise a rigid PCB, a flexible PCB or a rigid-flex PCB. Rigid-flex PCBs are PCBs which are flexible (flex) and rigid at the same time.

They comprise a combination of flexible and rigids circuit boards without the need for physical connectors in-between. Such design may comprise multiple layers of flexible circuit substrates attached to one or more rigid circuit boards. A design with rigid-flex PCBs may allow for increased flexibility of the architecture and applicability (it may allow for different formats in 2D and 3D), reduced costs due to an elimination of connectors and/or reduced space requirements. In an embodiment, the assembly 10 as a whole can form a rigid-flex PCB. In an example, the processing circuit board 110 may comprise a rigid PCB, the at least one connecting circuit board 120 may comprise a flexible PCB and the at least one sensing circuit board 130 may comprise a rigid PCB. Only the at least one connecting circuit board 120 may be or comprise a flexible PCB and may directly couple the processing circuit board 110 and the at least one sensing circuit board 130. In some embodiments, the at least one connecting circuit board 120 and/or the at least one sensing circuit board 130 may comprise a frangible material through which the boards 120, 130 may be broken at a desired location and assembled in a desired manner to provide a specific format.

As illustrated in Figs. 2 to 5, the processing circuit board 110 may comprise at least one processing unit PU. In an embodiment, the processing circuit board 110 may comprise a PCB and the processing unit PU may be mounted on the PCB. In embodiments, the at least one processing unit PU may comprise a microprocessor, a microcontroller or a field programmable gate array (FPGA). The processing circuit board 110, more specifically the at least one processing unit PU, may be configured to collect magnetic field measurements measured with the at least one magnetometer 140. Furthermore, the processing circuit board 110, more specifically the at least one processing unit PU, may be configured to process the collected magnetic field measurements to track and/or determine a location of the at least one magnetic object 20 within a sensing volume M (and/or area). The at least one connecting circuit board 120 may be configured to root and/or map signals (e.g., magnetic field measurements) from the at least one sensing circuit board 130 to the processing circuit board 110. The processing circuit board 110, the at least one connecting circuit board 120 and/or the at least one sensing circuit board 130 may comprise integrated circuit for connecting the at least sensing circuit board 130 to the processing circuit board 110 via the connecting circuit board 120. The integrated circuit may be adapted to transmit magnetic field measurements from the at least one magnetometer 140 to the processing circuit board, more specifically the at least one processing unit PU, via the sensing circuit board, the connecting circuit board and the processing circuit board. In some embodiments, the at least one connecting circuit board 120 may comprise an integrated circuit dedicated to performing data acquisition.

The processing circuit board 110 may comprise at least one first connector. The at least one connecting circuit board 120 may comprise at least one second connector. The at least one sensing circuit board 130 may comprise at least one third connector (the respective connectors are not explicitly shown in the Figs.). The at least one second connector of the at least one connecting circuit board 120 may be connected to the at least one first connector of the processing circuit board 110. The at least one third connector of the at least one sensing circuit board 130 may be connected to the at least one second connector of the at least one connecting circuit board 120. In some embodiments, the at least one connecting circuit board 120 may comprise at least one fourth connector. The at least one third connector of the at least one sensing circuit board 130 may be connected to the at least one fourth connector and the at least one second connector may be connected to the at least one first connector. The respective connectors may be mechanical connectors which allow for coupling and/or decoupling of the respective circuit boards. The respective connectors may allow for an electrical connection between the respective circuit boards. In some embodiments, the at least one connecting circuit board 120 may comprise or be a flexible PCB which may be directly connected to the at least one first connector and the at least one third connector (i.e., without providing dedicated connectors on the at least one connecting circuit board 120).

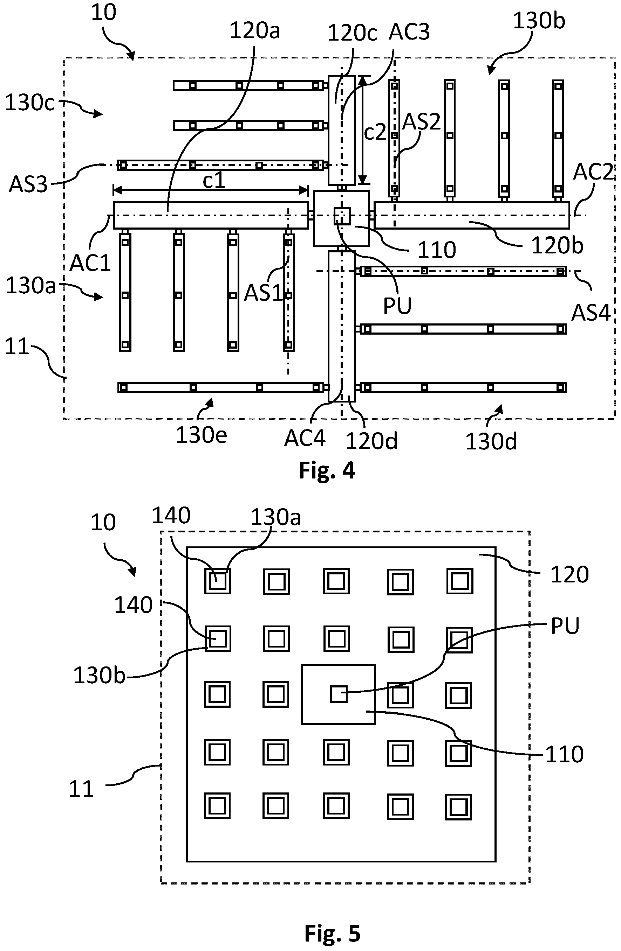

In some embodiments, e.g., as shown in Figs. 2 to 4, the assembly 10, more specifically the at least one sensing circuit board 130, may comprise a plurality of magnetometers 140. Each sensing circuit board 130 may comprise a plurality of magnetometers 140. In the embodiment as shown in Fig. 5, the at least one sensing circuit board 130 may comprise a single (i.e, precisely one) magnetometer 140. In some embodiments (e.g., as illustrated in Fig. 5), each sensing circuit board 130 may comprise a single magnetometer 140. Based on the design of Fig. 5, a low weight assembly 10 may be provided, magnetometers may be easily replaced and the assembly 10 may be provided with reduced costs. In some embodiments as shown in Figs. 2 to 5, the assembly 10, more specifically the at least one sensing circuit board 130, may comprise one or more first sensing circuit boards 130a and one or more second sensing circuit boards 130b, each comprising at least one magnetometer 140. Referring to Fig. 2, the processing circuit board 110 and/or the at least one connecting circuit board 120 may comprise at least one additional magnetometer 150. In some embodiments, the processing circuit board 110 and/or the at least one connecting circuit board 120 may comprise a plurality of additional magnetometers 150. The respective magnetometers 140, 150 may be mounted on the respective circuit boards 110, 120, 130.

Referring to Figs. 2 to 5, the assembly 10 may comprise a plurality of magnetometers 140 and/or a plurality of additional magnetometers 150. The plurality of magnetometers 140 and/or the plurality of additional magnetometers 150 may be distributed substantially uniformly over the entire assembly 10. Thereby, a homogeneous arrangement of the magnetometers 140, 150 can be provided throughout the assembly 10 to measure the magnetic field created by at least one magnetic object 20. The arrangement of the magnetometers 140, 150, relative to the entire assembly 10 may be determined by a physical area of the entire assembly 10 in combination with a density metric that may be indicative of a required number of magnetometers 140, 150 per area to provide sufficient magnetic field measurements for a desired sensing volume (and/or area), as well as sufficient accuracy for tracking and/or location determination. In examples, the density metric may ensure that the number of magnetometers per square cm may be substantially constant throughout the assembly 10. In more detail, the at least one sensing circuit board 130 may comprise a plurality of magnetometers 140. The at least one sensing circuit board 130 may be arranged with respect to the at least one connecting circuit board 120 and the processing circuit board 110 such that the plurality of magnetometers 140 is distributed substantially uniformly over the entire assembly 10. Furthermore, the plurality of magnetometers 140 may be arranged on the at least one sensing circuit board 130 such that the uniform distribution may be achieved. In some embodiments, the at least one sensing circuit board 130 may comprise a plurality of magnetometers 140 and the processing circuit board 110 and/or the at least one connecting circuit board 120 may comprise a plurality of additional magnetometers 150. The at least one sensing circuit board 130, the at least one connecting circuit board 120 and/or the processing circuit board 110 may be arranged with respect to each other such that the plurality of magnetometers 140 and the plurality of additional magnetometers 150 are distributed substantially uniformly over the entire assembly 10.

In embodiments, at least one first sensing circuit board 130a may comprise a single magnetometer 140 and at least one second sensing circuit board 130b may comprise a plurality of magnetometers 140. In some embodiments, the at least one first sensing circuit board 130a may comprise a first plurality of magnetometers 140a and the at least one second sensing circuit board 130b may comprise a second plurality of magnetometers 140b. The first plurality of magnetometers 140a may comprise a different number of magnetometers compared to the second plurality of magnetometers 140b. The respective magnetometers 140a, 140b may be separated from each other and distributed, more specifically uniformly distributed, over the respective sensing circuit board 130, 130a, 130b. The plurality of magnetometers 140 may be provided in a linear arrangement on the at least one sensing circuit board 130. In an example as shown in Fig. 2, the at least one first sensing circuit board 130a may comprise a first length 11 and may comprise a first plurality of magnetometers 140a distributed along the at least one first sensing circuit board 130a. The at least one second sensing circuit board 130b may comprise a second length l2 and may comprise a second plurality of magnetometers 140b distributed along the at least one second sensing circuit board 130b. The first length 11 may be larger than the second length l2 and the first plurality of magnetometers 140a may be larger than the second plurality of magnetometers 140b. Thus, different dimensions of sensing circuit boards 130 may be provided which can be tailored to a desired sensing volume and/or area. In embodiments, each sensing circuit board 130 may comprise the same number of magnetometers. As shown in the Figs., the respective sensing circuit boards may comprise a longitudinal shape, e.g., in the form of flat strips, on which the respective magnetometers are arranged.

In some embodiments, the processing circuit board 110, the at least one connecting circuit board 120 and the at least one sensor circuit board 130 are arranged in a common plane. The expression "common plane" may be defined as a plane which extends through each of the processing circuit board 110, the at least one connecting circuit board 120 and the at least one sensor circuit board 130. Thereby, an assembly with reduced thickness may be provided, e.g., as shown in Figs. 2 to 4. In another embodiment, e.g., as indicated in Fig. 5, the at least one sensing circuit board 130 may be arranged above or below the at least one connecting circuit board 120. The expression "above or below" means that a plane extending through the at least one sensing circuit board 130 is parallel to or at an angle relative to a plane extending through the connecting circuit board 120. The processing circuit board 110 may also be arranged above or below the at least one connecting circuit board 120, or, have a common plane with the at least one connecting circuit board 130. In the embodiment shown in Fig. 5, the processing circuit board 110, the at least one connecting circuit board 120 and the at least one sensor circuit board 130 may form a stack of circuit boards.

As shown in Figs. 2 to 5, the at least one sensing circuit board 130 may be coupled to a first side of the at least one connecting circuit board 120. The processing circuit board 110 may be coupled to a second side of the at least one connecting circuit board 120 different than the first side. The one or more first sensing circuit boards 130a may be coupled to a first side of the at least one connecting unit 120 and the one or more second sensing circuit boards 130b may be coupled to a second side of the at least one connecting unit 120. In embodiments, the second side may be opposite or adjacent (e.g., perpendicular) to the first side.

The one or more first sensing circuit boards 130a may define a first longitudinal axis AS1. The one or more second sensing circuit boards 130b may define a second longitudinal axis AS2. The at least one connecting circuit board 130 may define a longitudinal axis AC. In the example shown in Fig. 2, the one or more first sensing circuit boards 130a and the one or more second sensing circuit boards 130b may be coupled to the at least one connecting circuit board 120 on opposite sides of the at least one connecting circuit board 120, more specifically such that their respective longitudinal axes AS1, AS2 substantially coincide. The one or more first sensing circuit boards 130a and the one or more second sensing circuit boards 130b may be coupled to the at least one connecting circuit board 120 such that their respective longitudinal axes AS1, AS2 are substantially perpendicular to the longitudinal axis AC of the at least one connecting circuit board 120.

The embodiment of Fig. 3 may comprise all features as described above. As shown, the at least one connecting circuit board 120 may comprise a first connecting circuit board 120a and at least one second connecting circuit board 120b. The first connecting circuit board 120a may be coupled to a first side of the processing circuit board 110 and the at least one second connecting circuit board 120b may be coupled to a second side of the processing circuit board 110. In embodiments, the second side may be opposite or adjacent to the first side. In embodiments, the first connecting circuit board 120a and the at least one second connecting circuit board 120b may comprise a different size (e.g., length) which may be adapted to the number of sensing circuit boards that are coupled with the respective connecting circuit boards. The length of the respective connecting circuit boards may also be adapted and tailored to a desired sensing volume and/or area. In examples, as shown in Fig. 4, the first connecting circuit board 120a may comprise a first length c1 and the at least one second connecting circuit board 120c may comprise a second length c2 which may be smaller than the first length c1. In other embodiments, the length of the respective connecting circuit boards may be the same (e.g., as shown in Fig. 3). Thereby, a number of individual components may be reduced, resulting in a simpler assembly 10.

As shown in Fig. 3, the first connecting circuit board 120a and the second connecting circuit board 120b may be coupled to the processing circuit board 110 on opposite sides of the processing circuit board 110. Each of the first connecting circuit board 120a and the second connecting circuit board 120b may comprise a longitudinal axis AC1, AC2. The first connecting circuit board 120a and the second connecting circuit board 120b may be coupled to the processing circuit board 110 such that their respective longitudinal axes AC1, AC2 substantially coincide. The one or more first sensing circuit boards 130a may be coupled to the first connecting circuit board 120a. The one or more second sensing circuit boards 130b may be coupled to the at least one second connecting circuit board 120b, more specifically such that their respective longitudinal axes AS1, AS2 are substantially perpendicular to the respective longitudinal axes AC1, AC2 of the first connecting board 120a and the second connecting board 120b.

Furthermore, the assembly 10, more specifically the at least one sensing circuit board 130, may comprise one or more third sensing circuit boards 130c and one or more fourth sensing circuit boards 130d, each comprising at least one magnetometer 140. The one or more third sensing circuit boards 130c and one or more fourth sensing circuit boards 130d may comprise a third and fourth longitudinal axis AS3, AS4. As shown in the embodiment of Fig. 3, the one or more first sensing circuit boards 130a and the one or more third sensing circuit boards 130c may be coupled to opposite sides of the first connecting circuit board 120a, more specifically such that their respective longitudinal axes AS1, AS3 are substantially perpendicular to the longitudinal axis AC1 of the first connecting circuit board 120a. The one or more second sensing circuit boards 130b and the one or more fourth sensing circuit boards 130d may be coupled to opposite sides of the second connecting circuit board 120b, more specifically such that their respective longitudinal axes AS2, AS4 are substantially perpendicular to the longitudinal axis AC2 of the second connecting circuit board 120b. The respective axes AS1, AS2, AS3, AS4 may extend substantially parallel with respect to each other. In embodiments, the respective second side may be opposite the respective first side. The resulting assembly may be a "fish bone assembly" as shown in Fig. 3. Based on this design, only a small number of circuit boards may be required, each of which may comprise a small size. This may allow a reduction of costs. The respective sensing circuit boards 130a-d may comprise a longitudinal shape with a longitudinal axis AS1-4 and may be coupled with the respective connecting circuit boards 120a, 120b adjacent to each other. The respective sensing circuit boards 130a-d coupled to the opposing sides of a connecting circuit board 130a, 130b may have a common longitudinal axis. The first and second connecting circuit boards 120a, 120b can be coupled to the respective sides of the processing circuit board so that they also have a common longitudinal axis, as shown in Fig. 3.

Referring to the embodiment shown in Fig. 4 which may be combinable with all features describe above, the assembly 10, more specifically the at least one connecting circuit board 120, may comprise a first connecting circuit board 120a, a second connecting circuit board 120b, a third connecting circuit board 120c and a fourth connecting circuit board 120d. The processing circuit board 110 may have a rectangular shape. Each connecting circuit board 120a-d may be coupled to a respective side of the processing circuit board 110. The resulting assembly 10 may be a "wheel assembly" as shown in Fig. 4. Based on this design, connections between the respective sensing circuit board(s), connecting circuit board(s) and the processing circuit board(s) may be provided in a simple way. The first connecting board 120a and the second connecting board 120b may be coupled to the processing circuit board 110 on first opposite sides of the processing circuit board 110, more specifically such that their respective longitudinal axes AC1, AC2 substantially coincide. The third connecting circuit board 120c and the fourth connecting circuit board 120d may each comprise a longitudinal axis AC3, AC4. The third connecting circuit board 120c and the fourth connecting circuit board 120d are coupled to the processing circuit board 110 on second opposite sides of the processing circuit board 110, more specifically such that their respective longitudinal axes AC3, AC4 substantially coincide. The second opposite sides may be different from the first opposite side. In other words, the longitudinal axes AC1, AC2 of the first connecting circuit board 120a and the second connecting circuit board 120b may be substantially perpendicular to the longitudinal axes AC3, AC4 of the third connecting circuit board 120c and the fourth connecting circuit board 120d.

In embodiments, e.g., as shown in Fig. 4, the assembly 10, more specifically the at least one sensing circuit board 130, may comprise one or more first sensing circuit boards 130a coupled to a side of the first connecting circuit board 120a and extending (from the connecting circuit board) in a first direction and one or more second sensing circuit boards 130b coupled to a side of the second connecting circuit board 120b and extending opposite to the first direction. Furthermore, the assembly 10 may comprise one or more third sensing circuit boards 130c coupled to a side of the third connecting circuit board 120c which is facing away from the one or more second sensing circuit boards 130b and extending in a second direction, and one or more fourth sensing circuit boards 130d coupled to a side of the fourth connecting circuit board 120d which is facing away from the one or more first sensing circuit boards 130a and extending opposite to the second direction. The first direction may be perpendicular to the second direction. Respective longitudinal axes AS1, AS2 of the one or more first sensing circuit boards 130a and the one or more second sensing circuit boards 130b may extend substantially perpendicular to longitudinal axes AC1, AC2 of the first connecting circuit board 120a and the second connecting circuit board 120b, and more specifically perpendicular to longitudinal axes AS3, AS4 of the one or more third sensing circuit boards 130c and the one or more fourth sensing circuit boards 130d.

The longitudinal axes AS1, AS2 of the one or more first and second sensing circuit boards 130a, 130b may extend substantially parallel to the third and fourth longitudinal axes AC3, AC4 of the third and fourth connecting boards 120c, 120d. The longitudinal axes AS3, AS4 of the one or more third and fourth sensing circuit boards 130c, 130d may extend substantially parallel to the longitudinal axes AC1, AC2 of the first and second connecting boards 120a, 120b.

In an embodiment, as indicated in Fig. 4, the assembly 10 may further comprise at least one or more fifth sensing circuit boards 130e. In the embodiment shown in Fig. 4, the one or more fifth sensing circuit boards 130e may be coupled to a side of the fourth connecting circuit board 120d facing towards the one or more first sensing circuit boards 130a and extending in the second direction. Additionally or alternatively, the one or more fifth sensing circuit boards 130e may be coupled to the other connecting circuit boards 120a, 120b, 130c.

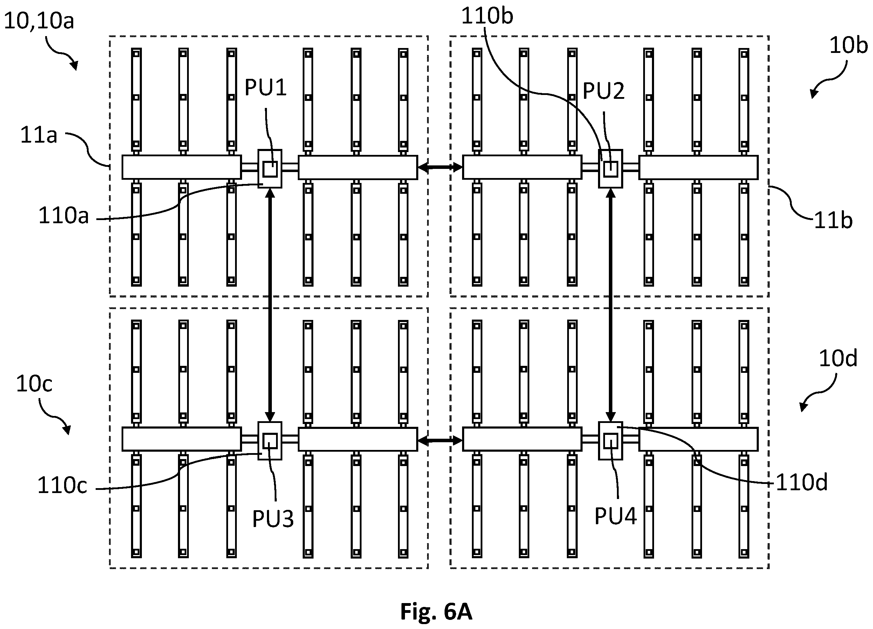

Figs. 6A to 7 are schematic top views of a system 1 for tracking and/or determining a location of at least one magnetic object 20 according to a second aspect of the present disclosure.

The system 1 for tracking and/or determining a location of at least one magnetic object 20 comprises a first assembly 10a for tracking and/or determining a location of at least one magnetic object 20, and at least one second assembly 10b, 10c, 10d for tracking and/or determining a location of at least one magnetic object 20. At least one of the first assembly 10a and the at least one second assembly 10b, 10c, 10d is an assembly 10 according to the above aspects of the present disclosure. In some embodiments, each of the first assembly 10a and the at least one second assembly 10b, 10c, 10d is an assembly 10 according to the above aspects of the present disclosure. The first assembly 10a and the at least one second assembly 10b, 10c, 10d may be (at least) communicatively coupled with each other. The above-described effects and advantages for the assembly 10 may apply analogously to the system 1. In case a larger sensing volume (and/or area) should be provided for some applications, additional modules (e.g., sensing circuit boards 130 and/or connecting circuit boards 120) and/or assemblies 10 can be easily coupled with the already existing modules (i.e., the circuit boards 120, 130) and/or assemblies 10. Thereby, a flexible and customizable architecture of the system 1 can be provided, manufacturing costs can be reduced, an applicability can be improved, and the system 1 can be simplified. For example, assemblies 10 according to the first aspect of the present disclosure can be added to or removed from the system 1 without changing the entire architecture. Thus, a scalable system can be provided and a faster adaption and/or initialization of separate sensing volumes M and/or areas can be achieved.

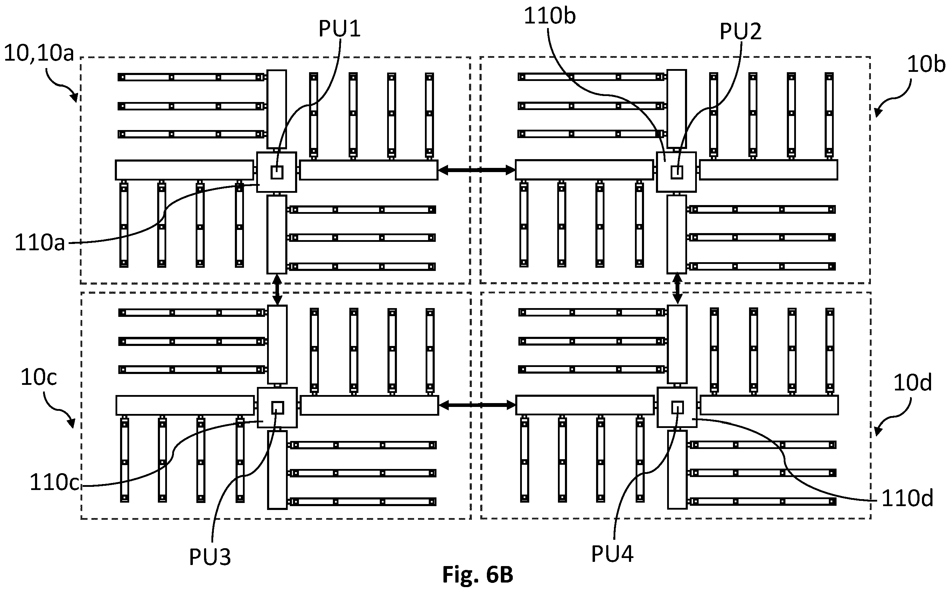

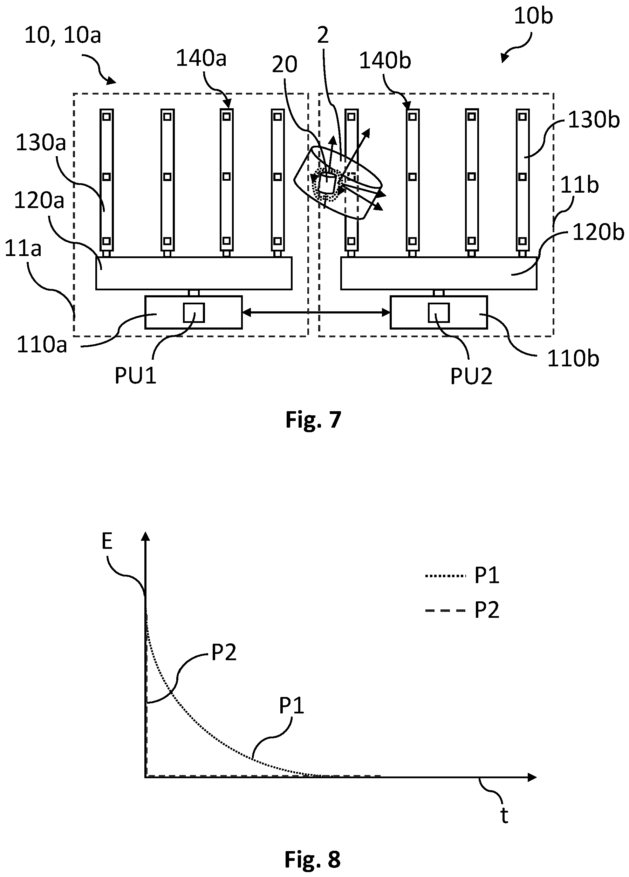

In Fig. 7, a schematic top view of the system 10 according to an embodiment of the present disclosure is shown, wherein at least one magnetic object 20 transitions from a first assembly 10, 10a to at least one second assembly 10b. "Transitioning" means that the magnetic object 20 moves, e.g., during a user operation, from the first assembly 10a to the at least one second assembly 10b, or vice versa. More specifically, during transition from the first assembly 10a to the at least one second assembly 10b, the magnetic object 20 may move from the sensing volume of the first assembly 10a to the sensing volume of the at least one second assembly 10b. In some examples, "transitioning" means that the at least one magnetic obj ect 20 leaves an edge area of the first assembly 10a and moves to an edge area of the at least one second assembly 10b-d, or vice versa. The principles described for Fig. 7, more specifically with respect to the transition and exchange of magnetic field measurements, may be analogously applied to the embodiments of Figs. 6A and 6B (e.g., wherein four assemblies are provided).

As indicated, e.g., in Figs. 6A and 7, the system 1 may comprise at least one system housing that is accommodating the first assembly 10, 10a and/or the at least one second assembly 10b, 10c, 10d. In some embodiments, the at least one system housing may be or may comprise a furniture (e.g., a table), an electronics device (e.g., a notebook, a laptop, or a tablet), a screen, a wall, a presentation board, a whiteboard, a paper board, a trackpad, or a touchpad. In some embodiments, the at least one system housing may comprise a flexible or a rigid material. The at least one system housing may comprise coupling means (e.g., non-positive or friction fit coupling means, and/or positive coupling means) configured to couple the at least one system housing to another device or component. As shown in Figs. 6A and 7, the at least one system housing may comprise a first housing 11a accommodating the first assembly 10a and at least one second housing 1 1b accommodating the at least one second assembly 10b. The first housing 11a and the at least one second housing 11b may be coupled with each other via respective coupling means as described above.

As indicated by the arrows in Figs. 6A to 7, the first assembly 10, 10a may be (at least) communicatively coupled with the at least one second assembly 10b, 10c, 10d. In some embodiments, the first assembly 10, 10a may be mechanically and communicatively coupled with the at least one second assembly 10b, 10c, 10d. In some embodiments, the first assembly 10, 10a may be foldable coupled with the at least one second assembly 10b-d. The mechanical coupling may be provided via the respective coupling means. The first assembly 10a may comprise a first processing circuit board 110a and the at least one second assembly 10b, 10c, 10d may comprise (at least one) second processing circuit board 110b, 110c, 110d. The first processing circuit board 110a and the at least one second processing circuit board 1 10b, 110c, 110d may be communicatively coupled with each other. More specifically, the first processing circuit board 110a may comprise at least one first processing unit PU1 and the at least one second processing circuit board 110b, 110c, 110d may comprise at least one second processing unit PU2, PU3, PU4. The at least one first processing unit PU1 and the at least one second processing unit PU2, PU3, PU4 may be communicatively coupled with each other.

The first processing circuit board 110a and/or the second processing circuit board 110b, 110c, 110d may be configured to collect magnetic field measurements measured with the at least one magnetometer 140 (or in case two assemblies according to the first aspect of the present disclosure are provided, at least two magnetometers 140). More specifically, the first assembly 10a may comprise at least one first magnetometer 140a, and the at least one second assembly 10b, 10c, 10d may comprise at least one second magnetometer 140b.

Referring to Fig. 7, the first processing circuit board 110a may be configured to collect first magnetic field measurements, more specifically measured with the at least one first magnetometer 140a. The at least one second processing circuit board 110b, 110c, 110d may be configured to collect second magnetic field measurements, more specifically measured with the at least one second magnetometer 140b. The first magnetic field measurements may be different from the second magnetic field measurements. The first processing circuit board 110a and/or the at least one second processing circuit board 1 10b, 1 10c, 110d may be configured to transmit and/or receive the respective magnetic field measurements to and/or from the respective other one of the first processing circuit board 110a and the second processing circuit board 110b, 110c, 110d. The at least one first processing unit PU1 and the at least one second processing unit PU2 may be configured to process the collected first and/or second magnetic field measurements. The first processing circuit board 110a and/or at least one second processing circuit board 110b, 110c, 110d (more specifically, the at least one first processing unit PU1 and/or the at least one second processing unit PU2) may be configured to track and/or determine a location of the at least one magnetic object 20 based on the processed first and/or second magnetic field measurements. The first processing circuit board 110a and/or the at least one second processing circuit board 110b, 110c, 110d may be configured to transmit and/or receive the respective magnetic object location to and/or from the respective other one of the first processing circuit board 110a and the second processing circuit board 110b, 110c, 110d. In order to transmit and/or receive the respective measurements and data (i.e., to establish the communication), the first processing circuit board 110a, and the at least one second processing circuit 110b, 110c, 110d may each comprise a transmitting component and/or a receiving component, e.g., to establish a wireless connection. In some embodiments, the first processing circuit board 110a and the at least one second processing circuit board 110b, 110c, 110d may be communicatively coupled with each other by a wired connection.

Referring to Figs. 6A and 6B, an example of a system 1 is shown with four assemblies 10a-d communicatively coupled with each other. However, it should be noted that more assemblies 10 or less (e.g., three) assemblies 10 may be provided and coupled with each other. Fig. 6A illustrates four assemblies 10a-d as shown in Fig. 3 coupled with each other (i.e., coupling four "fish-bone assemblies" with each other). Fig. 6B illustrates four assemblies as shown in Fig. 4 coupled with each other (i.e., coupling four "wheel assemblies" with each other) - however, without the embodiment of fifth one or more sensing circuit boards 130e. It should be noted that the "fish-bone assembly" may also be combined with the "wheel assembly".

In addition to the first assembly 10, 10a and the second assembly 10b as described above, the system 1 may further comprise a third assembly 10c and at least one fourth assembly 10d, each for tracking and/or determining a location of at least one magnetic object 20. Each of the third assembly 10c and the at least one fourth assembly 10d may be an assembly 10 according to the first aspect of the present disclosure. The third assembly 10c may comprise a third processing circuit board 110c and the at least one fourth assembly 10d may comprise a fourth processing circuit board 110d. As illustrated by the arrows in Figs. 6A and 6B, the first assembly 10a, the second assembly 10b, the third assembly 10c and the fourth assembly 10d may be communicatively coupled with each other. In some embodiments, the respective assemblies 10a-d may be communicatively coupled with each other by a wireless connection. In other embodiments, the respective assemblies 10a-d may be communicatively coupled with each other by a wired connection. In embodiments, the first assembly 10a, the second assembly 10b, the third assembly 10c and the at least one fourth assembly 10d may be mechanically coupled with each other. In embodiments, the respective assemblies 10a-d may also communicate with each other via the mechanical couplings. In such embodiments, wireless transmitting and/or receiving components may be omitted. In some embodiments, the communication may be established by connecting respective connecting circuit boards 120a-d with each other. For example, the first assembly 10, 10a may comprise a first connecting circuit board 120a and the at least one second assembly 10b, 10c, 10d may comprise at least one second connecting circuit board 120b, 120c, 120d. The connecting circuit boards may be mechanically coupled with each other as indicated in Fig. 6B. Thereby, a wired connection may be established to allow for communication between the first processing circuit board 110a and the at least one second processing circuit board 110b, 110c, 110d.

In the embodiment of Fig. 6A, the assemblies 10a-d are arranged as to form a 2x2 matrix. However, other arrangements are also possible (e.g., 1x4, 4x1) depending on the sensing volume and/or area to be provided with the system 1 (and an associated number of assemblies 10). The first processing circuit board 110a may be communicatively coupled with the second processing circuit board 110b and the third processing circuit board 110c. The communication may be established by a wireless connection or a wired connection. In an example, a connecting circuit board of the second assembly 10b may be mechanically and communicatively coupled with a connecting circuit board of the first assembly 10a, thereby establishing communication between the first processing circuit board 110a and the second processing circuit board 110b. The first processing circuit board 110a may be wirelessly connected or by wire to the third processing circuit board 110c. A connecting circuit board of the fourth assembly 10d may be mechanically and communicatively coupled with a connecting circuit board of the third assembly 10c, thereby establishing communication between the fourth processing circuit board 110d and the third processing circuit board 110c. The first processing circuit board 110a may be wirelessly connected or by wire to the third processing circuit board 110c. In this example, the fourth processing circuit board 110d may communicate with the first processing circuit board 110a via the second processing circuit board 110b or the third processing circuit board 110c.

A similar coupling and communication is shown in Fig. 6B. However, due to the "wheel assembly" design and the associated arrangement of the connecting circuit boards, the first assembly 10a may be mechanically and communicatively coupled with the second assembly 10b and the third assembly 10c via respective connecting circuit boards, which in turn may be mechanically and communicatively coupled to the fourth assembly via respective connecting circuit boards.

Referring to Figs. 6A to 7, the first assembly 10, 10a and the at least one second assembly 10b, 10c, 10d may be coupled with each other such that the first assembly 10a and the at least one second assembly 10b, 10c, 10d comprise a common plane. The expression "common plane" may be defined as a plane which extends through each of the assemblies. In some embodiments, the assemblies 10a-d may be arranged parallel with respect to each other.

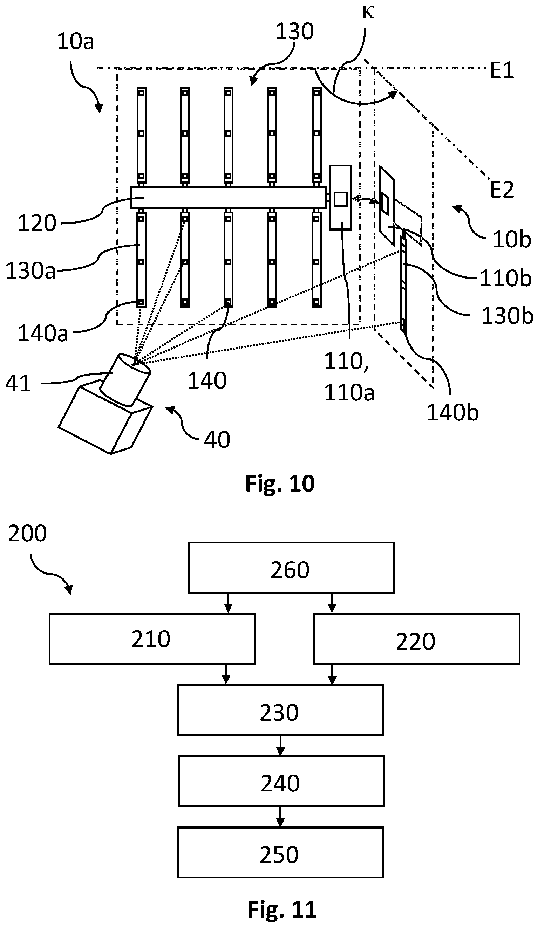

Fig. 10 is a schematic perspective view of the system 1 having first and second assemblies 10a, 10b coupled with each other. In some embodiments, the first assembly 10, 10a and the at least one second assembly 10b, 10c, 10d may be coupled with each other such that the first assembly 10, 10a is arranged at an angle κ relative to the at least one second assembly 10b, 10c, 10d. In some embodiments, the first assembly 10, 10a and the at least one second assembly 10b, 10c, 10d may be coupled with each other such that the first assembly 10, 10a is arranged perpendicular relative to the at least one second assembly 10b-d.

As indicated in Fig. 10, the first assembly 10a may be arranged in a first plane E1 and the at least one second assembly 10b, 10c, 10d may be arranged in a second plane E2. The respective planes E1, E2 may be angled with respect to each other or parallel (but distanced). The assembly angle κ may be defined between the first plane E1 and the second plane E2.

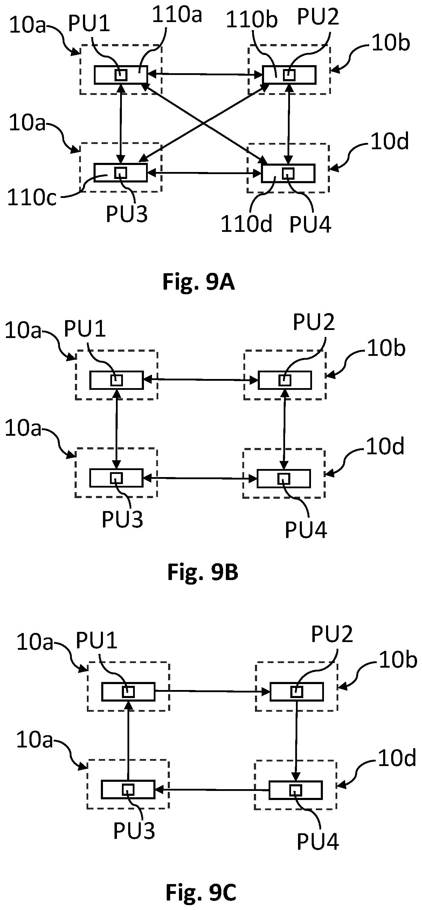

Figs. 9A to 9E are schematic top views of the system 1 with various embodiments of processing units PU1-4 communicatively coupled with each other. Figs. 6A and 6B are only examples of communicatively coupling the respective assemblies 10a-d with each other to establish communication (e.g., of data) between the respective processing circuit boards 110a-d, and more specifically between respective processing units PU1-4. Figs. 9A to 9E illustrate different examples of how communication between the respective processing circuit boards 110a-d, and more specifically between the respective processing units PU1-4, can be established. Figs. 9A to 9E illustrate examples wherein four assemblies 10a-d (and respective processing circuit boards 110a-d) are provided. However, as already mentioned above, more or less processing circuit boards 110a-d may be provided.

The first processing circuit board 110a may comprise at least one first processing unit PU1, the second processing circuit board 110b may comprise at least one second processing unit PU2, the third processing circuit board 110c may comprise at least one third processing unit PU3, and the fourth processing circuit board 110d may comprise at least one fourth processing unit PU4.

As illustrated in Fig. 9A, the first processing unit PU1, the second processing unit PU2, the third processing unit PU3 and the fourth processing unit PU4 may be directly communicatively coupled with each other. In other words, each of the processing units PU1-PU4 may be communicatively coupled with each other, more specifically such that direct communication is formed between each of the processing units PU1-PU4 (in both ways). In this embodiment, the assemblies 10a-d may be arranged as to form a 2x2 matrix.

In the embodiment of Fig. 9B, each processing unit PU1, PU2, PU3, PU4 may be directly communicatively coupled only with neighboring processing units PU1, PU2, PU3, PU4 (e.g., as also shown in the examples of Figs. 6A and 6B). In this embodiment, the assemblies 10a-d may be arranged as to form a 2x2 matrix. In this embodiment, the first processing unit PU1 may be communicatively coupled with the second and third processing units PU2, PU3, more specifically such that direct communication is formed between the first processing unit PU1, the second processing unit PU2 and the third processing unit PU3. However, the fourth processing unit PU4 may not be a neighboring processing unit relative to the first processing unit PU1. In other words, the fourth processing unit PU4 may be indirectly, communicatively coupled with the first processing unit PU1 via the second and/or the third processing unit PU2, PU3. The same applies, vice versa, for the respective other ones. Thereby, several couplings (e.g., wireless connections or physical connectors) between the respective processing circuit boards 110a-d comprising the processing units PU1-4 can be reduced.

In the example of Fig. 9C, each processing unit PU1-4 may be communicatively coupled with neighboring processing units PU1-4 such that it can transmit data to exactly one neighboring processing unit PU1-4 and receive data from exactly one other processing unit PU1-4. In other words, the connections between the neighboring processing units may be one-way. As an example, the first processing unit PU1 can only receive data from the third processing unit PU3 and can only transmit data to the second processing unit PU2. The same applies, vice versa, to the respective other processing units.

In embodiments, for the examples of Figs. 9A to 9C, the connection or communication between the respective processing units PU1-4 may be provided by USART/UART, SPI and/or I2C.

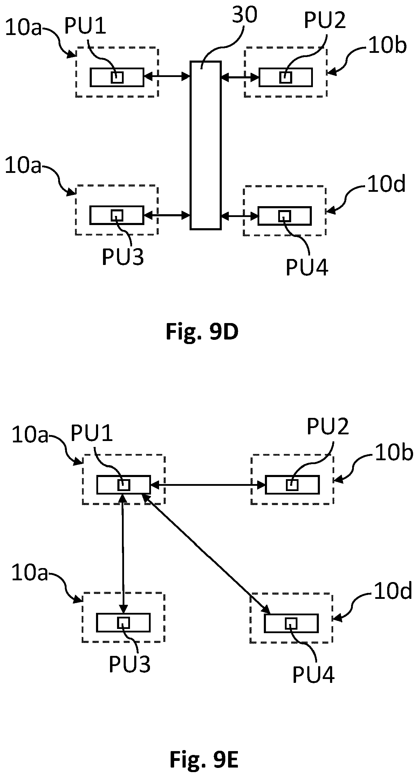

Referring to Fig. 9D, the system 1 may further comprise at least one data BUS element 30. Each processing unit PU1-4 may be directly communicatively coupled with the at least one data BUS element 30. Due to the provision of the data BUS element 30, only two processing units of the processing units PU1-4 can communicate with each other at the same time. The connection or communication between the respective processing units PU1-4 and the data BUS element 30 may be provided by CAN. In this case, only one processing unit of the processing units may communicate with the CAN BUS element at the same time.

In the example of Fig. 9E, exactly one processing unit PU1-4 is directly communicatively coupled with the other processing units PU1-4. In this embodiment, a master-slave structure may be provided. As shown, the first processing unit PU1 may be directly communicatively coupled with each other processing unit PU2-4 (i.e., the second, third and fourth processing units). The first processing unit PU1 may function as a master element, and the second, third and fourth processing units PU2-4 may function as a slave element. The second, third and fourth processing units PU2-4 may only communicate with the first processing unit PU1. However, they may not communicate with the other ones of the second, third and fourth processing units PU2-4. In this embodiment, the first processing unit PU1 may collect all data (e.g., magnetic field measurement (data) and/or magnetic object location (data)) from the second, third and fourth processing units PU2-4. The first processing unit PU1 may be communicatively coupled with the other processing units PU2-4 by Ethernet, Bluetooth Low Energy (BLE), USART, I2C, I3C, SPI, QSPI, WiFi, or ModBUS. In some embodiments, the first processing unit PU1 may be an external processing unit (i.e., not integrated in one of the assemblies 10a-d).

As already mentioned above, although the above principles have been described for four processing units PU1-4, it should be understood that these may analogously be provided for less processing units (e.g., two or three processing units) or more processing units.

Referring back to Fig. 10, the system 1 may further comprise a calibration device 40. The calibration device 40 may be configured to determine a location of the at least one sensing circuit board 130, more specifically of the at least one magnetometer 140, and, if provided, the at least one additional magnetometer 150, relative to the assembly 10. The determined location may comprise position and/or orientation. The calibration device 40 can be used to calibrate the at least one assembly 10 before being finally assembled in the system 1. "Calibration" means in this context that the calibration device 40 may be configured to determine an exact location (including position and/or orientation) of the at least one sensing circuit board 130, more specifically of the at least one magnetometer 140, and, if provided, the at least one additional magnetometer 150, relative to the entire assembly 10 (and more specifically relative to the at least one connecting circuit board 120 and/or the processing circuit board 110). Each assembly 10a-d can be calibrated separately and then assembled to provide the system 1 comprising at least two assemblies 10a-d, more specifically relative to the reference coordinate system XYZ. In some embodiments, the system 1 comprising the at least two assemblies 10, 10a-d may be assembled first and then calibrated. In embodiments, the calibration device 40 may at least one optical calibration unit 41 configured to generate optical data of the assembly 10. The optical data is indicative of location of the at least one sensing circuit board 130, more specifically of the at least one magnetometer 140, and, if provided, the at least one additional magnetometer 150, relative to the entire assembly 10. The calibration device 40 may be configured to determine the location relative to the assembly 10 based on the optical data, more specifically in 3D. The optical calibration unit 41 may comprise a camera or a laser configured to scan a volume. In embodiments, such optical data may be further used to determine a structure of an interaction surface on which the at least one magnetic object 20, or a user-borne device 2 comprising the at least one magnetic object 20, is operated. Thereby, a contact detection of the user-borne device 2 with the interaction surface may be improved.

In some embodiments (not shown in the Figs.), which may be combined with all described embodiments and features herein, the assembly 10 and/or the system 1 may comprise a user-borne device 2 comprising the at least one magnetic object 20. The user-borne device 2 may be a stylus and may be operated "in air" or on an interaction surface. The assembly 10 and/or system 1 may be configured to determine a location of the user-borne device 2 based on a determining a location of the at least one magnetic obj ect 20. The assembly 10 and/or the system 1 may be integrated in or coupled to a board, e.g., a presentation board, which may define an interaction surface. The assembly 10 and/or the system 1 may further comprise at least one projection device communicatively coupled with the assembly 10, more specifically with the at least one processing circuit board 110. In embodiments, the connection may be established wirelessly or by wire. In some embodiments, the communication may be provided by USB, BLE (Bluetooth Low Energy), WiFi and/or Ethernet. The projection device may be configured to project a track of the at least one magnetic object 20 (and the user-borne device 2) on the board. The track may be provided by tracking and/or location determination, with the assembly 10 and/or the system 1, of the at least one magnetic object 20 over a time period, comprising multiple time samples. In some embodiments, an additional assembly 10 and/or system 1 may be provided for tracking and/or location determination of the at least one magnetic object 20 according to aspects of the present disclosure. The additional assembly 10 and/or the system 1 may have determined an additional track of the at least one magnetic object 10. The at least one projection device can additionally project the additional track onto the board. In examples, the user-borne device 2 may be a writing and/or drawing device (e.g., a pen with an erasing feature or a brush). The track and/or the additional track may be provided as a writing, drawing and/or erasing track (e.g., imitating corresponding strokes) on the board.

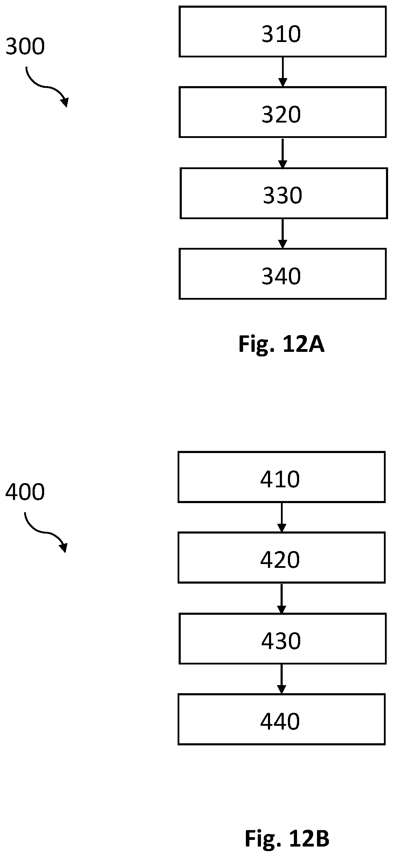

Figs. 12A and 12B are schematic views of process flow diagrams for method(s) of assembling an assembly 10 and a system 1 according to aspects of the present disclosure.

Fig. 12A illustrates a method 300 of assembling an assembly 10 for tracking and/or determining a location of at least one magnetic object 20 according to a third aspect of the present disclosure. The method 300 of assembling an assembly 10 for tracking and/or determining a location of at least one magnetic object 20, more specifically of the assembly 10 according to the first aspect of the present disclosure, comprises:
a) providing 310 a processing circuit board 110, at least one connecting circuit board 120, and at least one sensing circuit board 130 comprising at least one magnetometer 140,
b) coupling 320, mechanically and communicatively, the at least one connecting circuit board 120 with the processing circuit board 110, and
c) coupling 330, mechanically and communicatively, the at least one sensing circuit board 130 with the at least one connecting circuit board 120.

Steps b) and c) can also be carried out the other way round. The above-described effects and advantages for the assembly 10 may apply analogously to the method 300. The method 300 may allow for flexible and customizable assembling of the assembly 10. Furthermore, manufacturing costs can be reduced, an applicability can be improved, and the assembly 10 can be simplified.

Referring to Figs. 10 and 12A, the method 300 may further comprise calibrating 340 the assembly 10 with a calibration device 40 as already describe above. The calibrating 340 may comprise:
determining a location of the at least one sensing circuit board 130, more specifically of the at least one magnetometer 140, relative to the assembly 10.

Location may comprise position and/or orientation. The position and/or orientation may be defined with respect to the reference coordinate system XYZ. The calibration device 40 can be used to calibrate the at least one assembly 10 before being assembled in a system 1. "Calibration" means in this context that the calibration device 40 may be configured to determine an exact location of the at least one sensing circuit board 130, more specifically of the at least one magnetometer 140, and, if provided, the at least one additional magnetometer 150, relative to the entire assembly 10 (and more specifically relative to the at least one connecting circuit board 120 and/or the processing circuit board 110). Each assembly 10 can be calibrated separately and then assembled to provide the system 1.

In embodiments, the calibration device 40 may comprise at least one optical calibration unit 41, and calibrating 340 may comprise:
generating optical data of the assembly 10, wherein the optical data is indicative of a location of the at least one sensing circuit board 130, more specifically of the at least one magnetometer 140, and, if provided, the at least one additional magnetometer 150, relative to the entire assembly 10.

In some embodiments, the location may comprise a position and/or an orientation of the at least one sensing circuit board 130, more specifically of the at least one magnetometer. The calibration device 40 may be configured to determine the location the at least one sensing circuit board 130, more specifically of the at least one magnetometer 140, and, if provided, the at least one additional magnetometer 150, relative to the assembly 10 based on the optical data, more specifically in 3D. The optical calibration unit 41 may comprise a camera or a laser configured to scan a volume. In embodiments, such optical data may be further used to determine a structure of an interaction surface on which the at least one magnetic object 20, or a user-borne device 2 comprising the at least one magnetic object 20, is operated. Thereby, a contact detection of the user-borne device 2 with the interaction surface may be improved (which will be described in more detail below).

Fig. 12A illustrates a method 400 of assembling a system 1 for tracking and/or determining a location of at least one magnetic object 20 according to a fourth aspect of the present disclosure. The method 400 of assembling a system 1 for tracking and/or determining a location of at least one magnetic object 20, more specifically of the system 1 according to the second aspect of the present disclosure, comprises:
a) providing 410 a first assembly 10, 10a for tracking and/or determining a location of at least one magnetic object 20,
b) providing 420 at least one second assembly 10b, 10c, 10d for tracking and/or determining a location of at least one magnetic object 20, and
c) coupling 430 the first assembly 10, 10a with the at least one second assembly 10b, 10c, 10d.

In embodiments, at least one of the first assembly 10, 10a and the at least one second assembly 10b-d may be assembled by a method 300 according to the third aspect of the present disclosure. In some embodiments, each of the first assembly 10, 10a and the at least one second assembly 10b-d may be assembled by a method 300 according to the third aspect of the present disclosure. At least one of the first assembly 10a and the at least one second assembly 10b-d may be an assembly according to the first aspect of the present disclosure. In some embodiments, each of the first assembly 10a and the at least one second assembly 10b-d may be an assembly 10 according to the first aspect of the present disclosure of the. Steps b) and c) can also be carried out the other way round. The above-described effects and advantages for the method 300, system 1 and assembly 10 may apply analogously to the method 400. The method 400 may allow for flexible and customizable assembling of the system 1. Furthermore, manufacturing costs can be reduced, an applicability can be improved, and the system 1 can be simplified.

In embodiments, coupling 430 may comprise:
coupling, at least communicatively, and more specifically mechanically and communicatively, the first assembly 10, 10a with the at least one second assembly 10b, 10c, 10d. In embodiments, a wireless connection for communication should be established, and coupling 430 may comprise wirelessly coupling the first assembly 10, 10a with the at least one second assembly 10b, 10c, 10d. Additionally or alternatively, a wired connection for communication should be established, and coupling 430 may comprise coupling the first assembly 10, 10a with the at least one second assembly 10b, 10c, 10d by wire. The wired connection may be provided by mechanically coupling the first assembly 10a with the at least one second assembly 10b-d, e.g., via the respective connecting circuit boards 120a-d, wherein an electrical connection may be established between the respective processing circuit boards 110a-d.

Referring to Figs. 10 and 12B, the method 400 may further comprise calibrating 440 the system 1 with a calibration device 40. In embodiments, the calibration 440 of the system 1 may be combined with the calibration of the assembly 10 or respective assemblies 10a-d as described above.

Calibrating 440 may comprise:
determining, with the calibration device 40, a location of the first assembly 10, 10a relative to the at least one second assembly 10b, 10c, 10d.

The location may include position and/or orientation. In some embodiments, calibration can be done by comparing the locations of the first assembly 10, 10a relative to the at least one second assembly 10b, 10c, 10d. Then, relative positions and/or orientations of the respective assemblies 10, a-d, indicating their positions and/or orientations relative to each other, may be deduced from the compared locations. This calibration can be performed one time in production or once the product (i.e., the system 1) is assembled.

As mentioned above, the first assembly 10a may comprise at least one first sensing circuit board 130a comprising at least one first magnetometer 140a, and the at least one second assembly 10a may comprise at least one second sensing circuit board 130b, 130c, 130d comprising at least one second magnetometer 140b. Calibrating 440 may further comprise:
determining, with the calibration device 40, a location of the at least one first sensing circuit board 130a and/or the at least one second sensing circuit board 130b, 130c, 130d relative to the first assembly 10a and/or relative to the at least one second assembly 10b, 10c, 10d.

More specifically, calibrating 440 may comprise determining, with the calibration device 40, a location of the at least one first magnetometer 140a and/or the at least one second magnetometer 140b, and (if provided) of at least one additional magnetometer 150, relative to the first assembly 10a and/or relative to the at least one second assembly 10b, 10c, 10d. Each location may comprise a position and/or an orientation. An accuracy of the system 1 during tracking and/or determining a magnetic object location may be improved since a precise location of the respective magnetometers 140, 150 can be determined based on the calibration.

According to a fifth aspect of the present disclosure, a method 200 for tracking and/or determining a location of at least one magnetic object 20 is provided.

The basic principles of methods for determining the location of a magnetic object with magnetometers within a sensing volume and associated algorithms are known in the prior art, for example as described in US 2020/116524 A1 or US 2015/057969 A1.

Basically, a method 200 may comprise determining at least one magnetic object location within the sensing volume M created by the at least one magnetometer 140, 150 based on obtained magnetic field measurements. The method 200 may comprise defining the reference coordinate system XYZ as described above. Determining a magnetic object location may comprise determining an absolute magnetic object location indicative of an absolute magnetic object position and/or an absolute magnetic object orientation of the magnetic object 110 relative to the reference coordinate system XYZ. More specifically, the absolute magnetic object location may be determined based on the obtained magnetic field measurements.

The at least one magnetic object 20 may comprise a magnetic field which may change and which can be described with a magnetic object signature. The magnetic signature of a magnetic object 20 may have distinctive characteristics making it possible to distinguish the magnetic object 20 from other magnetic objects. Each magnetic signature may comprise a set of vectors describing a magnetic object vector field of the magnetic object. The magnetic field may comprise a magnetic field strength and/or a magnetic field form. The magnetic object may comprise a magnetic object moment vector 21 and/or a magnetic object position vector associated with the magnetic field. In other words, the magnetic object may be modeled as a magnetic dipole being defined by the magnetic object moment vector and/or the magnetic object position vector. The magnetic object moment vector and/or the magnetic object position vector may be used to determine a magnetic field change. The magnetic object moment vector may define a magnetic object orientation and/or a magnetic object strength, i.e., the magnetic field strength of the magnetic object. The magnetic object strength may be related to the magnetization of the magnetic object and its volume. The magnetic field form may be indicative of a 3D form of the magnetic field associated with the magnetic object. A change of the magnetic field strength and/or a change of the magnetic field form may occur due to another object being brought in proximity to (or away from) the magnetic object. The other object may have an influence (i.e., change) the magnetic field strength and/or the magnetic field form of the magnetic object. The magnetic field form may be defined by the magnetic object signature and the magnetic object vector field as described above, and which is detectable with at least one magnetometer.

The absolute magnetic object location may comprise an absolute magnetic object position and/or an absolute magnetic object orientation relative to the reference coordinate system XYZ. The absolute magnetic object location may be determined based on an implementation of a mathematical model associating each measurement of the at least one magnetometer 140, 150 with a location of the magnetic object 20 in the reference coordinate system XYZ. Each magnetometer of the plurality of magnetometers 300 may be a vector magnetometer and may be configured to measure the magnetic field in one, two or three dimensions. In an embodiment, a coulombian model may be implemented, which may allow a modeling of complex magnetizations of the magnetic object 20. In examples, a Dipolar model, an Amperian model and/or Mapping based of a Look-Up Table (LUT) may be implemented. In some embodiments, the method may comprise determining a user-borne device location, e.g., when the at least one magnetic object 20 is coupled to the user-borne device 2. Determining a user-borne device location may comprise determining a relative magnetic object location indicative of a relative magnetic object position and/or a relative magnetic object orientation of the magnetic object 20 relative to the user-borne device 2, more specifically to a device coordinate system as described above. The relative magnetic object location may comprise a relative magnetic object position and/or a relative magnetic object orientation relative to the device coordinate system. Determining a relative magnetic object location may be based on the absolute magnetic object location as described above and a set of geometric parameters. The set of geometric parameters may comprise predefined geometric parameters indicative of a geometric position and a geometric orientation of the magnetic object 20 relative to the user-borne device 2. In other words, based on the determined absolute location of the magnetic object 20 and the knowledge of the arrangement of the magnetic object 20 relative to or within the user-borne device 2 (more specifically relative to the device coordinate system), the user-borne device location may be known. In embodiments, the method 200 may further comprise applying a filter for filtering the determined magnetic object location and/or the user-borne device location. Magnetic and electronic noise, as well as environmental variations may lead to non-smooth location determinations over time. Based on the filtering, a smooth location trajectory of the at least one magnetic object 20 relative to the reference coordinate system XYZ and/or to an interaction surface may be achieved. For filtering, optimization algorithms or recursive Bayesian estimation such as a Kalman filter may be applied, more specifically an extended Kalman filter or an unscented Kalman filter. In some embodiments, a low-pass filter may be used in combination with a Kalman filter. In embodiments, the at least one magnetic object 20 may be tracked over a time period comprising multiple time samples. At each time sample, the method 200 may comprise determining the magnetic object location. The method may further comprise storing the determined and/or detected features for each time sample.

Fig. 11 illustrates a process flow diagram of the method 200 according to the fifth aspect of the present disclosure. The method 200 comprises:
- collecting 210 first magnetic field measurements associated with a magnetic field created by at least one magnetic object 20 with a first assembly 10, 10a for tracking and/or determining a location of at least one magnetic object 20,
- collecting 220 second magnetic field measurements associated with the magnetic field created by the at least one magnetic object 20 with at least one second assembly 10b, 10c, 10d for tracking and/or determining a location of at least one magnetic object 20, more specifically wherein at least one of the first assembly 10, 10a and the at least one second assembly 10, 10b-d is an assembly according to the first aspect of the present disclosure,
- exchanging 230 the collected first and second magnetic field measurements between the first assembly 10, 10a and the at least one second assembly 10b, 10c, 10d, and
- determining 240, with at least one of the first assembly 10, 10a and the at least one second assembly 10b, 10c, 10d, a location of the at least one magnetic object 20 based on the first and second collected magnetic field measurements.

The above-described effects and advantages for the system 1 and assembly 10 may apply analogously to the method 200. In embodiments, each of the first assembly 10, 10a and the at least one second assembly 10, 10b-d may be an assembly 10 according to the first aspect of the present disclosure. In embodiments, the first assembly 10, 10a and the at least one second assembly 10, 10b-d may be of (or comprised with) a system 1 for tracking and/or determining a location of at least one magnetic object 20, more specifically of (or comprised with) a system 1 according to the second aspect of the present disclosure. Each of the assemblies 10a-d may comprise at least one processing unit PU1-4. At least one processing unit PU1-4 may be configured to execute the method 200 (or steps of the method). Additionally or alternatively, an external processing unit with which the system 1 is communicatively coupled may be configured to execute the method 200 (or steps of the method 200). Referring to Fig. 10, the first magnetic field measurements may be generated with at least one first sensing circuit board 130a comprising at least one first magnetometer 140a of the first assembly 10a. The first magnetic field measurements may be collected with a first processing circuit board 110a comprising at least one first processing unit PU1 of the first assembly 10a. The second magnetic field measurements may be generated with at least one second sensing circuit board 130b comprising at least one second magnetometer 140b of the at least one second assembly 10b. The second magnetic field measurements may be collected with a second processing circuit board 110b comprising at least one second processing unit PU2 of the at least one second assembly 10b. At least one of the first and second processing units PU1, PU2 may be configured to determine the location of the at least one magnetic object 10. In some embodiments, each processing unit PU1, PU2 may be configured to determine the location of the at least one magnetic object 20. In some embodiments, only one or each of the first and second processing units may be configured to compute location data of the at least one magnetic object. Additionally or alternatively, the first and second processing units PU1, PU2 may perform magnetic field measurement and may transmit the data to an external processing unit which may be configured to determine the magnetic object location. Exchanging the collected magnetic field measurements may comprise the exchange or be in the form of (raw, i.e. non-processed) magnetic field measurements, magnetic field measurement data (e.g., processed magnetic field measurements), and/or magnetic object location data (which may be determined based on the magnetic field measurements).

The method 200 may provide an improved tracking and/or determination of a location of at least one magnetic object 20 of a system 1, more specifically according to the second aspect of the present disclosure. Based on the method 200 as defined above, an error in location determination, in particular when the at least one magnetic object 20 moves from the first assembly 10a to the at least one second assembly 10b, can be reduced (see, e.g., Fig. 10). The respective assemblies 10a, 10b can share magnetic field measurements, associated measurement data and/or determined location data (which may be determined based on the magnetic field measurements and/or associated data) to determine a location of the magnetic object 20 with increased accuracy, even during transition of the magnetic object 20 from the first assembly 10a to the at least one second assembly 10b (especially in an edge area of the respective assemblies). A signal to noise ratio during measuring the magnetic field with the magnetometers 140, 150 (e.g., when the at least one magnetic object 20 is operated in the edge area of the respective assembly), can be increased thus leading to enhanced accuracy. Furthermore, since the respective assemblies 10a, 10b already receive the magnetic object location (data) from the respective other assembly, a time required for tracking the at least one magnetic object 20 may be reduced. By exchanging the magnetic field measurements, associated data and/or location data between the assemblies 10a, 10b-d, a sensing volume (and/or area) may be easily extended without reduced tracking and/or determination accuracy.

As mentioned above, based on the method 200 an error in magnetic object location determination, particularly when the at least one magnetic object 20 moves from the first assembly 10a to the at least one second assembly 10b or vice versa, can be reduced. Fig. 8 is a diagram showing an error in tracking and/or location determination of a system 1 as illustrated in Fig. 7 over a time. The horizontal axis t of the graph illustrates a time required to determine the magnetic object location and the vertical axis E of the graph illustrates an error in location determination that may occur during transition of the at least one magnetic object 20 from the first assembly 10a to the at least one second assembly 10b, or vice versa. The dotted graph P1 illustrates an error in magnetic object location determination over time, wherein the first assembly 10a and the second assembly 10b do not exchange magnetic field measurements, associated data and/or magnetic object location data. Particularly in initial sections of the time axis t the error is high, resulting in low accuracy of magnetic object location determination. The dashed graph P2 illustrates an error over time according to the method 200 of the present disclosure, wherein magnetic field measurements, associated data and/or magnetic object location data is exchanged between the first assembly 10a and the at least one second assembly 10b. Due to the exchanged measurements and/or data, the respective assemblies 10a, 10b can be initialized prior to and during transition of the at least one magnetic object 20 from the first assembly 10a to the at least one second assembly 10b, or vice versa. As a result, the error over time is very low, resulting in increased accuracy for magnetic object location determination even when the magnetic object 20 transitions from the first assembly 10a to the at least one second assembly 10b-d (and associated edge area).

In embodiments, exchanging 230 comprises transmitting the collected first magnetic field measurements from the first assembly 10, 10a to the at least one second assembly 10b, 10c, 10d, and/or transmitting the collected second magnetic field measurements from the at least one second assembly 10b, 10c, 10d to the first assembly 10, 10a. In some embodiments, each of the assemblies 10a-d may collect magnetic field measurements, may process magnetic field measurements to magnetic field measurement data, and may transmit the processed data to the respective other one of the first assembly 10a and the at least one second assembly 10b-d.

Determining 240 a location of the at least one magnetic object 20 may be further based on first location data determined by the first assembly 10, 10a (more specifically the first processing unit PU1), wherein first location data is indicative of a location of the at least one magnetic object 20 relative to the first assembly (10, 10a), and/or second location data determined by the at least one second assembly 10b, 10c, 10d (more specifically the second processing unit PU2-4), wherein second location data is indicative of a location of the at least one magnetic object 20 relative to the at least one second assembly 10b, 10c, 10d.

In embodiments, determining 240 a location of the at least one magnetic object 20 may comprise processing, with the first assembly 10, 10a, the first magnetic field measurements to first measurement data, determining, with the first assembly 10, 10a, first location data of the at least one magnetic object 20 based on the first measurement data, and transmitting the determined first location data from the first assembly 10, 10a to the at least one second assembly 10b, 10c, 10d.

Additionally or alternatively, determining 240 a location of the at least one magnetic object 20 may comprise processing, with the at least one second assembly 10b, 10c, 10d, the second magnetic field measurements to second measurement data, determining, with the at least one second assembly 10b, 10c, 10d, second location data of the at least one magnetic object 20 based on the second measurement data, and transmitting the determined second location data from the at least one second assembly 10b, 10c, 10d to the first assembly 10, 10a.

In some embodiments, determining 240 a location of the at least one magnetic object 20 may comprise tracking the first location data and/or the second location data over a time period, predicting a movement and/or trajectory of the at least one magnetic object 20 relative to the first assembly 10, 10a and/or the at least one second assembly 10b, 10c, 10d based on the tracked first location data and/or second location data, and exchanging the predicted movement and/or trajectory of the at least one magnetic object 20 between the first assembly 10, 10a and the at least one second assembly 10b, 10c, 10d. The exchanged predicted movement and/or trajectory may be used only for initialization of the respective assembly 10a-d, e.g., before the magnetic object 20 is operated in the respective sensing volume (and/or area). Thereby, the error over time as described above can be kept very low, resulting in increased accuracy for magnetic object location determination.

In embodiments, determining 240 a location of the at least one magnetic object 20 may further comprise determining a distance between the at least one magnetic object 20 to the first assembly 10, 10a and to the at least one second assembly 10b, 10c, 10d, and determining the location of the at least one magnetic object 20 with the assembly 10, 10a, 10b, 10c, 10d which has the smallest distance to the at least one magnetic object 20.

In embodiments, the method 200 may further comprise assuming a contact between the at least one magnetic object 20 or a user-borne device 2 comprising the at least one magnetic object 20 and an interaction surface on which the at least one magnetic object 20 or the user-borne device 2 is operable based on the determined magnetic object location. For example, the housing(s) of the assembly 10 or the system 1 may define the interaction surface 210. In other examples, the interaction surface may be provided on another device, e.g., a table or a board. Assuming a contact may comprise determining a contact event of the at least one magnetic object 20 or the user-borne device 2 comprising the at least one magnetic object 20 with the interaction surface. A specific change of the magnetic field strength and/or of the magnetic field form may be detected with the at least one magnetometer. The specific change may be indicative of a contact of the at least one magnetic object 20 or the user-borne device 2 comprising the at least one magnetic object 20 with the interaction surface. Furthermore, the method 200 may comprise representing 250 the at least one magnetic object 20 as virtual object on at least one output device 50 (see, e.g., Fig. 1) based on the determined location. More specifically a movement of the virtual object on the at least one output device 50 may be based on a virtual reproduction of the determined location of the at least one magnetic object 20, particularly relative to the first assembly 10, 10a and/or the at least one second assembly 10b, 10c, 10d. As an example, the user-borne device 2 may comprise the at least one magnetic object 20 and may be a writing and/or device. The assembly 10 or the system 1 may be coupled to a board, which may define an interaction surface. The writing device may be operated on the board, more specifically the interaction surface. A contact event of the writing device with the board may be determined and a location of the writing device (based on the determined magnetic object location over time) on the board may be represented as a virtual object in the form of written letters or sentences and/or drawing strokes (i.e., represented as digitized writing and/or drawing).

Referring back to Fig. 1, the movement of the at least one magnetic object 20 within the sensing volume M may be caused by a manipulation of at least one magnetic object 20 or user-borne device 2 coupled with the at least one magnetic object 20 during a user operation. In other words, the movement of the at least one magnetic object 20 may be determined and reproduced as a movement of the virtual object on the output device 50. The visual reproduction may be a motion of a cursor on the output device. In embodiments, the visual reproduction may not be identical to the design of the at least one magnetic object 20 and/or user-borne device 2 but may be any icon (e.g., an arrow, a picture). The at least one output device 50 may be a display or a screen. The screen may be coupled with the at least one housing of the system 1 which may accommodate at least one or all of the assemblies 10a-d.

In some embodiments, the first assembly 10, 10a and/or the second assembly 10, 10b may comprise a plurality of magnetometers 140, 150. The method 200 may further comprise calibrating 260 the first assembly 10, 10a and/or the at least one second assembly (10, 10b) to determine a location and/or a distribution of the plurality of magnetometers 140, 150 relative to the first assembly 10, 10a and/or to the second assembly 10, 10b. More specifically, the location includes a position and/or an orientation of the plurality of magnetometers 140, 150 relative to the first assembly 10, 10a and/or to the second assembly 10, 10b. In embodiments, the plurality of magnetometers may comprise the magnetometers of the (at least one) sensing circuit board(s) and additional magnetometers 150.

In embodiments, the first assembly 10, 10a may comprise a first plurality of magnetometers 140a, 150. Calibrating 260 may comprise obtaining first assembly data associated with the first assembly 10, 10a, wherein first assembly data includes dimension data and/or a location data of at least one first sensing circuit board 130a and/or at least one first connecting circuit board 120 relative to a first processing circuit board 110a, and determining, based on first assembly data, a location and/or a distribution of the first plurality of magnetometers 140a, 150 relative to the first assembly 10, 10a.

In embodiments, the plurality of magnetometers 140, 150 may be arranged on the at least one sensing circuit board 130 and/or the at least one connecting circuit board 120. An arrangement of the respective magnetometers 140, 150 on the at least one sensing circuit board 130 and/or on the at least one connecting circuit board 120 may be known and obtained by the processing unit PU of the processing circuit board 110 by connecting the sensing circuit board(s) and the connecting circuit board(s) to the processing circuit board. In case additional magnetometers 150 are also arranged on the processing circuit board 110, the processing circuit board may comprise dimension data and/or location data of these magnetometers.

In some embodiments, the at least one second assembly 10, 10a may comprise a second plurality of magnetometers 140b, 150. Calibrating 260 may comprise obtaining second assembly data associated with the second assembly 10, 10b, wherein second assembly data includes dimension data and/or a location data of at least one second sensing circuit board 130b and/or at least one second connecting circuit board 120b relative to a second processing circuit board 110b, and determining, based on second assembly data, a location and/or a distribution of the second plurality of magnetometers 140b, 150 relative to the second assembly 10, 10b.

The above-described embodiments may apply analogously. In embodiments calibrating 260 may further comprise determining, based on first assembly data, a location and/or a distribution of the first plurality of magnetometers 140a, 150 relative to the second assembly 10, 10b, and/or determining, based on second assembly data, a location and/or a distribution of the second plurality of magnetometers 140b, 150 relative to the first assembly 10, 10a.

In some embodiments, calibrating 260 may comprise obtaining location data associated with the first assembly 10, 10a and the second assembly 10b from a calibration device 40, wherein location data is indicative of a location of the first plurality of magnetometers 140a, 150 relative to the first assembly 10, 10a and of a location of the second plurality of magnetometers 140b, 150 relative to the second assembly (10b). In addition, calibrating 260 may comprise determining, based on the obtained location data, a location of the first plurality of magnetometers 140a, 150 relative to the second assembly 10b, and/or determining, based on the obtained location data, a location of the second plurality of magnetometers 140b, 150 relative to the first assembly 10, 10b.

The method 200 as described above may be a computer-implemented method. According to an aspect of the present disclosure, a computer system may be configured to execute the computer-implemented method 200 as described above. According to another aspect of the present disclosure a computer program may be configured to execute the computer-implemented method 200 as described above. Furthermore, a computer-readable medium or signal storing the computer program may be provided.

The above-described computer-implemented method 200 can comprise or be executable via a computer or a network of computers, the computer or network of computers comprising at least one processing unit (e.g., a processor) and at least one data storage (i.e., memory). The described procedural logic may be held in the form of executable code in at least one data storage and executed by the at least one processing unit. The systems 1 and assemblies 10 may send data to the at least one processing unit and, in examples, they may also receive instructions from the at least one processing unit. The processing unit may thereby direct user-initiated and/or automatically generated queries to the system 1 and/or the assembly 10. The system 1 and/or the assembly 10 is not limited to a particular hardware environment. Thus, distributed devices coupled via a network may perform the techniques described herein. The disclosure also includes electrical signals and computer-readable media defining instructions that, when executed by a processing unit, implement the techniques described herein. The system 1 and/or the assembly 10 may comprise at least one database. Alternatively, or in addition, the system 1 and/or the assembly 10 may access a database in a cloud (via a communication interface). The system 1 and/or the assembly 10 may comprise a (at least one) communication interface to couple the at least one processing unit and/or the database. The communication interface may comprise one or more of a network, internet, a local area network, a wireless local area network, a broadband cellular network, and/or a wired network. In examples, the system 1 and/or the assembly 10 may couple to one or more features via a server hosted in a cloud. The at least one processing unit mentioned above may be the at least one processing unit PU of the assembly 10 and/or the processing units PU1-4 of the system 1. In some embodiments, the least one processing unit mentioned above may be an external processing unit, communicatively coupled with respective processing units PU, PU1-4 of the assembly 10 and/or the system 1.

In some embodiments, a plurality of magnetic objects 20 may be operated in the sensing volume and/or area. More than one user-borne devices 2 may be provided and operated (e.g., manipulated by a user U) within the sensing volume M created by the plurality of magnetometers 300. Although the methods, systems and assemblies according to the present disclosure have been described for at least one magnetic object 20 (and the one user-borne device 2), the features as described above may also be applicable to every additional or other magnetic object 20 and/or user-borne device 2 operated within the sensing volume M and/or area.

Although the present invention has been described above and is defined in the attached claims, it should be understood that the invention may alternatively be defined in accordance with the following embodiments:
1. An assembly (10) for tracking and/or determining a location of at least one magnetic object (20), comprising:
   a processing circuit board (110),
   at least one connecting circuit board (120), and
   at least one sensing circuit board (130) comprising at least one magnetometer (140),
   wherein the at least one connecting circuit board (120) is mechanically and communicatively coupled with the processing circuit board (110), and
   wherein the at least one sensing circuit board (130) is mechanically and communicatively coupled with the at least one connecting circuit board (120).
2. The assembly (10) according to embodiment 1, wherein the processing circuit board (110) and/or the at least one connecting circuit board (120) comprises at least one additional magnetometer (150).
3. The assembly (10) according to embodiment 1 or embodiment 2, wherein the at least one sensing circuit board (130) is mechanically and communicatively coupled with the processing circuit board (110) via the at least one connecting circuit board (120).
4. The assembly (10) according to any one of the preceding embodiments, wherein the at least one magnetometer (140) is configured to measure a magnetic field created by at least one magnetic object (20), more specifically wherein the at least one magnetometer (140) is configured to generate magnetic field measurements of the magnetic field.
5. The assembly (10) according to any one of the preceding embodiments, wherein the processing circuit board (110) comprises at least one processing unit (PU).
6. The assembly (10) according to embodiment 5, wherein the processing circuit board (110), more specifically the at least one processing unit (PU), is configured to collect magnetic field measurements measured with the at least one magnetometer (140).
7. The assembly (10) according to embodiment 6, wherein the processing circuit board (110), more specifically the at least one processing unit (PU), is configured to process the collected magnetic field measurements to track and/or determine a location of the at least one magnetic object (20).
8. The assembly (10) according to any one of the preceding embodiments, wherein each of the processing circuit board (110), the at least one connecting circuit board (120) and the at least one sensing circuit board (130) is provided as a separate circuit board.
9. The assembly (10) according to any one of the preceding embodiments, wherein each of the processing circuit board (110), the at least one connecting circuit board (120) and the at least one sensing circuit board (130) comprises a printed circuit board (PCB).
10. The assembly (10) according to any one of the preceding embodiments, wherein the at least one connecting circuit board (120) comprises at least one second connector and at least one fourth connector, wherein the at least one second connector is connected to at least one first connector of the processing circuit board (110), and wherein the at least one sensing circuit board (130) comprises at least one third connector that is connected to the at least one fourth connector.
11. The assembly (10) according to any one of the preceding embodiments, wherein the at least one sensing circuit board (130) comprises a single magnetometer (140), more specifically wherein each sensing circuit board (130) comprises a single magnetometer (140).
12. The assembly (10) according to any one of embodiments 1 to 9, wherein the at least one sensing circuit board (130) comprises a plurality of magnetometers (140), more specifically wherein each sensing circuit board (130) comprises a plurality of magnetometers (140).
13. The assembly (10) according to any one of the preceding embodiments, wherein the processing circuit board (110), the at least one connecting circuit board (120) and the at least one sensor circuit board (130) are arranged substantially in a common plane, or, wherein the processing circuit board (110) and the at least one sensor circuit board (130) are arranged above or below the at least one connecting circuit board (120).
14. The assembly (10) according to any one of the preceding embodiments, wherein the at least one sensing circuit board (130) is coupled to a first side of the at least one connecting circuit board (120), and wherein the processing circuit board (110) is coupled to a second side of the at least one connecting circuit board (120) different than the first side.
15. The assembly (10) according to any one of the preceding embodiments, wherein the at least one sensing circuit board (130) comprises one or more first sensing circuit boards (130a) and one or more second sensing circuit boards (130b), each comprising at least one magnetometer (140).
16. The assembly (10) according to embodiment 15, wherein the one or more first sensing circuit boards (130a) is coupled to a first side of the at least one connecting unit (120) and wherein the one or more second sensing circuit boards (130b) is coupled to a second side of the at least one connecting unit (120).
17. The assembly (10) according to embodiment 15 or embodiment 16, wherein the one or more first sensing circuit boards (130a) and the one or more second sensing circuit boards (130b) are coupled to the at least one connecting circuit board (120) on opposite sides of the at least one connecting circuit board (120), more specifically such that their respective longitudinal axes (AS1, AS2) substantially coincide.
18. The assembly (10) according to any one of embodiments 14 to 17, wherein the one or more first sensing circuit boards (130a) and the one or more second sensing circuit boards (130b) are coupled to the at least one connecting circuit board (120) such that their respective longitudinal axes (AS1, AS2) are substantially perpendicular to a longitudinal axis (AC) of the at least one connecting circuit board (120).
19. The assembly (100) according to any one of the preceding embodiments, wherein the at least one connecting circuit board (120) comprises a first connecting circuit board (120a) and at least one second connecting circuit board (120b), wherein the first connecting circuit board (120a) is coupled to a first side of the processing circuit board (110), and wherein the at least one second connecting circuit board (120b) is coupled to a second side of the processing circuit board (110).
20. The assembly (10) according to embodiment 19, wherein the first connecting circuit board (120a) and the second connecting circuit board (120b) are coupled to the processing circuit board (110) on opposite sides of the processing circuit board (110), more specifically such that their respective longitudinal axes (AC1, AC2) substantially coincide.
21. The assembly (10) according to embodiment 19 or embodiment 20, when dependent on embodiment 15, wherein the one or more first sensing circuit boards (130a) is coupled to the first connecting circuit board (120a) and wherein the one or more second sensing circuit boards (130b) is coupled to the at least one second connecting circuit board (120b), more specifically such that their respective longitudinal axes (AS1, AS2) are substantially perpendicular to respective longitudinal axes (AC1, AC2) of the first connecting circuit board (120a) and the second connecting circuit board (120b).
22. The assembly (10) according to any one of embodiments 19 to 21, wherein the at least one sensing circuit board (130) comprises one or more third sensing circuit boards (130c) and one or more fourth sensing circuit boards (130d), each comprising at least one magnetometer (140),
   wherein the one or more first sensing circuit boards (130a) and the one or more third sensing circuit boards (130c) are coupled to opposite sides of the first connecting circuit board (120a) such that their respective longitudinal axes (AS1, AS3) are substantially perpendicular to the longitudinal axis (AC1) of the first connecting circuit board (120a), and
   wherein the one or more second sensing circuit boards (130b) and the one or more fourth sensing circuit boards (130d) are coupled to opposite sides of the second connecting circuit board (120b) such that their respective longitudinal axes (AS2, AS4) are substantially perpendicular to the longitudinal axis (AC2) of the second connecting circuit board (120b).
23. The assembly (10) according to any one of embodiments 1 to 21, wherein the at least one connecting circuit board (120) comprises a first connecting circuit board (120a), a second connecting circuit board (120b), a third connecting circuit board (120c) and a fourth connecting circuit board (120d), wherein each connecting circuit board (120a-d) is coupled to a respective side of the processing circuit board (110).
24. The assembly (10) according to embodiment 23, wherein the first connecting circuit board (120a) and the second connecting circuit board (120b) are coupled to the processing circuit board (110) on first opposite sides of the processing circuit board (110), more specifically such that their respective longitudinal axes (AC1, AC2) substantially coincide.
25. The assembly (10) according to embodiment 24, wherein the third connecting circuit board (120c) and the fourth connecting circuit board (120d) are coupled to the processing circuit board (110) on second opposite sides of the processing circuit board (110), more specifically such that their respective longitudinal axes (AC3, AC4) substantially coincide, particularly wherein the second opposite sides are different from the first opposite side.
26. The assembly (10) according to embodiment 24 and embodiment 25, wherein the longitudinal axes (AC1, AC2) of the first connecting circuit board (120a) and the second connecting circuit board (120b) are substantially perpendicular to the longitudinal axes (AC3, AC4) of the third connecting circuit board (120c) and the fourth connecting circuit board (120d).
27. The assembly (10) according to any one of embodiments 23 to 26, wherein the at least one sensing circuit board (130) comprises:
   one or more first sensing circuit boards (130a) coupled to a side of the first connecting circuit board (120a) and extending in a first direction,
   one or more second sensing circuit boards (130b) coupled to a side of the second connecting circuit board (120b) and extending opposite to the first direction,
   one or more third sensing circuit boards (130c) coupled to a side of the third connecting circuit board (120c) which is facing away from the one or more second sensing circuit boards (130b) and extending in a second direction, and
   one or more fourth sensing circuit boards (130d) coupled to a side of the fourth connecting circuit board (120d) which is facing away from the one or more first sensing circuit boards (130a) and extending opposite to the second direction.
28. The assembly (10) according to embodiment 27, wherein respective longitudinal axes (AS1, AS2) of the one or more first sensing circuit boards (130a) and the one or more second sensing circuit boards (130b) extend substantially perpendicular to longitudinal axes (AC1, AC2) of the first connecting circuit board (120a) and the second connecting circuit board (120b), and more specifically perpendicular to longitudinal axes (AS3, AS4) of the one or more third sensing circuit boards (130c) and the one or more fourth sensing circuit boards (130d).
29. The assembly (10) according to any one of the preceding embodiments, further comprising a housing that is accommodating the processing circuit board (110), the at least one connecting circuit board (120) and the at least one sensing circuit board (130).
30. The assembly (10) according to any one of the preceding embodiments, wherein the at least one sensing circuit board (130) comprises a plurality of magnetometers (140), and wherein the at least one sensing circuit board (130) is arranged with respect to the at least one connecting circuit board (120) and the processing circuit board (110) such that the plurality of magnetometers (140) is distributed substantially uniformly over the entire assembly (10).
31. The assembly according to any one of embodiments 2 to 30, wherein the at least one sensing circuit board (130) comprises a plurality of magnetometers (140) and wherein the processing circuit board (110) and/or the at least one connecting circuit board (120) comprises a plurality of additional magnetometers (150), wherein the at least one sensing circuit board (130), the at least one connecting circuit board (120) and the processing circuit board (110) are arranged with respect to each other such that the plurality of magnetometers (140) and the plurality of additional magnetometers (150) are distributed substantially uniformly over the entire assembly (10).
32. A system (1) for tracking and/or determining a location of at least one magnetic object (20), comprising:
   a first assembly (10a) for tracking and/or determining a location of at least one magnetic object (20), and
   at least one second assembly (10b, 10c, 10d) for tracking and/or determining a location of at least one magnetic object (20),
   wherein at least one of the first assembly (10a) and the at least one second assembly (10b, 10c, 10d) is an assembly (10) according to any one of the preceding embodiments.
33. The system (1) according to embodiment 32, wherein each of the first assembly (10a) and the at least one second assembly (10b, 10c, 10d) is an assembly (10) according to any one of embodiments 1 to 31.
34. The system (1) according to embodiment 32 or embodiment 33, wherein the system (1) comprises at least one housing accommodating the first assembly (10, 10a) and/or the at least one second assembly (10b, 10c, 10d),
   wherein the at least one housing is one or more of a furniture, an electronics device, a screen, a wall, a presentation board, a whiteboard, a paper board, or a mouse pad.
35. The system (1) according to any one of embodiments 32 to 34, wherein the first assembly (10, 10a) is at least communicatively coupled with the at least one second assembly (10b, 10c, 10d), more specifically wherein the first assembly (10, 10a) is mechanically and communicatively coupled with the at least one second assembly (10b, 10c, 10d).
36. The system (1) according to any one of embodiments 32 to 35, wherein a first processing circuit board (110a) of the first assembly (10, 10a) and a second processing circuit board (110b, 110c, 110d) of the at least one second assembly (10b, 10c, 10d) are communicatively coupled with each other.
37. The system (1) according to any one of embodiments 32 to 36, wherein the first assembly (10, 10a) and the at least one second assembly (10b, 10c, 10d) are coupled with each other such that the first assembly (10c) and the at least one second assembly (10b, 10c, 10d) comprise a common plane.
38. The system (1) according to any one of embodiments 32 to 36, wherein the first assembly (10, 10a) and the at least one second assembly (10b, 10c, 10d) are coupled with each other such that the first assembly (10, 10a) is arranged at an angle, more specifically perpendicular, relative to the at least one second assembly (10b, 10c, 10d).
39. The system (1) according to any one of embodiments 36 to 38, wherein the first assembly (10, 10a) comprises at least one first magnetometer (140a) and wherein the at least one second assembly (10b) comprises at least one second magnetometer (140b), wherein each magnetometer (140a, 140b) is configured to measure a magnetic field created by at least one magnetic object (20), and wherein the first processing circuit board (110a) and/or the second processing circuit board (110b, 110c, 110d) is configured to collect magnetic field measurements measured with the at least one first magnetometer (140a) and the at least one second magnetometer (140b).
40. The system (1) according to embodiment 39, wherein the first processing circuit board (110a) is configured to collect first magnetic field measurements measured with the at least one first magnetometer (140a), and wherein the at least one second processing circuit board (110b, 110c, 110d) is configured to collect second magnetic field measurements measured with the at least one second magnetometer (140b),
   wherein the first processing circuit board (110a) and/or the second processing circuit board (110b, 110c, 110d) is configured to transmit and/or receive the respective first and second magnetic field measurements to and/or from the respective other one of the first processing circuit board (110a) and the second processing circuit board (110b, 110c, 110d).
41. The system (1) according to embodiment 40, wherein the first processing circuit board (1 10a), more specifically at least one first processing unit (PU1) comprised with the first processing circuit board (110a), and/or the second processing circuit board (110b), more specifically at least one second processing unit (PU2) comprised with the at least one second processing circuit board (1 10b), is configured to process the collected first and/or second magnetic field measurements.
42. The system (1) according to embodiment 41, wherein the first processing circuit board (110a) and/or second processing circuit board (110b) is configured to track and/or determine a location of the at least one magnetic object (20) based on the processed first and/or second magnetic field measurements, and
   more specifically wherein the first processing circuit board (110a) and/or the second processing circuit board (110b, 110c, 110d) is configured to transmit and/or receive the respective magnetic object location to and/or from the respective other one of the first processing circuit board (110a) and the second processing circuit board (110b, 110c, 110d).
43. The system (1) according to any one of embodiments 32 to 42, further comprising:
   a third assembly (10c) and at least one fourth assembly (10d), each for tracking and/or determining a location of at least one magnetic object (20),
   wherein each of the third assembly (10c) and the fourth assembly (10d) is an assembly according to any one of embodiments 1 to 31,
   wherein the third assembly (10c) comprises a third processing circuit board (110c) and
   wherein the at least one fourth assembly (10d) comprises a fourth processing circuit board (110d).
44. The system (1) according to embodiment 43, wherein the first assembly (10a), the second assembly (10b), the third assembly (10c) and the fourth assembly (10d) are communicatively coupled with each other.
45. The system (1) according to embodiment 43 or embodiment 44, wherein the first assembly (10a), the second assembly (10b), the third assembly (10c) and the fourth assembly (10d) are mechanically coupled with each other.
46. The system (1) according to any one of embodiments 43 to 45, when dependent on embodiment 36, wherein the first processing unit (PU1), the second processing unit (PU2), the third processing unit (PU3) and the fourth processing unit (PU4) are directly communicatively coupled with each other.
47. The system (1) according to any one of embodiments 43 to 45, when dependent on embodiment 36, wherein each processing unit (PU1, PU2, PU3, PU4) is directly communicatively coupled only with neighboring processing units (PU1, PU2, PU3, PU4).
48. The system (1) according to any one of embodiments 43 to 45, when dependent on embodiment 36, wherein each processing unit (PU1, PU2, PU3, PU4) is communicatively coupled with neighboring processing units (PU1, PU2, PU3, PU4) such that it can transmit data to exactly one neighboring processing unit (PU1, PU2, PU3, PU4) and receive data from exactly one other processing unit (PU1, PU2, PU3, PU4).
49. The system (1) according to any one of embodiments 43 to 45, when dependent on embodiment 36, further comprising at least one data BUS element (30), wherein each processing unit (PU1, PU2, PU3, PU4) is directly communicatively coupled with the at least one data BUS element (30).
50. The system (1) according to any one of embodiments 43 to 45, when dependent on embodiment 36, wherein exactly one processing unit (PU1, PU2, PU3, PU4) is directly communicatively coupled with the other processing units (PU1, PU2, PU3, PU4).
51. A method (300) of assembling an assembly (10) for tracking and/or determining a location of at least one magnetic object (20), more specifically of the assembly (10) according to any one of embodiments 1 to 31, comprising:
   a) providing (310) a processing circuit board (110), at least one connecting circuit board (120), and at least one sensing circuit board (130) comprising at least one magnetometer (140),
   b) coupling (320), mechanically and communicatively, the at least one connecting circuit board (120) with the processing circuit board (110), and
   c) coupling (330), mechanically and communicatively, the at least one sensing circuit board (130) with the at least one connecting circuit board (120).
52. The method (300) according to embodiment 51, further comprising calibrating (340) the assembly (10) with a calibration device (40), wherein calibrating (340) comprises: determining a location of the at least one sensing circuit board (130), more specifically of the at least one magnetometer (140), relative to the assembly (10).
53. The method (300) according to embodiment 50, wherein the calibration device (40) comprises at least one optical calibration unit, and wherein calibrating (340) comprises: generating optical data of the assembly (10), wherein the optical data is indicative of a location of the at least one sensing circuit board (130), more specifically of the at least one magnetometer (140), relative to the assembly (10).
54. A method (400) of assembling a system (1) for tracking and/or determining a location of at least one magnetic object (20), more specifically of the system (1) according to any one of embodiments 32 to 50, comprising:
   a) providing (410) a first assembly (10, 10a) for tracking and/or determining a location of at least one magnetic object (20),
   b) providing (420) at least one second assembly (10b, 10c, 10d) for tracking and/or determining a location of at least one magnetic object (20), and
   c) coupling (430) the first assembly (10, 10a) with the at least one second assembly (10b, 10c, 10d),
   wherein at least one of the first assembly (10, 10a) and the at least one second assembly (10b, 10c, 10d) is assembled by a method (300) according to any one of embodiments 51 to 53.
55. The method (400) according to embodiment 54, wherein each of the first assembly (10, 10a) and the at least one second assembly (10b, 10c, 10d) are assembled by a method (300) according to any one of embodiments 51 to 53.
56. The method (400) according to embodiment 54 or embodiment 55, wherein coupling (430) comprises:
   coupling, at least communicatively, and more specifically mechanically and communicatively, the first assembly (10, 10a) with the at least one second assembly (10b, 10c, 10d).
57. The method (400) according to any one of embodiments 54 to 56, further comprising calibrating (440) the system (1) with a calibration device (40).
58. The method (400) according to embodiment 57, wherein calibrating (440) comprises:
   determining, with the calibration device (40), a location of the first assembly (10, 10a) relative to the at least one second assembly (10b, 10c, 10d).
59. The method (400) according to embodiment 57 or embodiment 58, wherein the first assembly (10a) comprises at least one first sensing circuit board (130a) comprising at least one first magnetometer (140a), and wherein the at least one second assembly (10a) comprises at least one second sensing circuit board (130b, 130c, 130d) comprising at least one second magnetometer (140b),
   wherein calibrating (440) comprises:
   determining, with the calibration device (40), a location of the at least one first sensing circuit board (130a) and/or the at least one second sensing circuit board (130b, 130c, 130d) relative to the first assembly (10a) and/or relative to the at least one second assembly (10b, 10c, 10d),
   more specifically determining, with the calibration device (40), a location of the at least one first magnetometer (140a) and/or the at least one second magnetometer (140b) relative to the first assembly (10a) and/or relative to the at least one second assembly (10b, 10c, 10d).
60. A method (200) for tracking and/or determining a location of at least one magnetic object (20), comprising:
   - collecting (210) first magnetic field measurements associated with a magnetic field created by at least one magnetic object (20) with a first assembly (10, 10a) for tracking and/or determining a location of at least one magnetic object (20),
   - collecting (220) second magnetic field measurements associated with the magnetic field created by the at least one magnetic object (20) with at least one second assembly (10b, 10c, 10d) for tracking and/or determining a location of at least one magnetic object (20), more specifically wherein at least one of the first assembly (10, 10a) and the at least one second assembly (10b, 10c, 10d) is an assembly (10) according to any one of embodiments 1 to 31,
   - exchanging (230) the collected magnetic field measurements between the first assembly (10, 10a) and the at least one second assembly (10b, 10c, 10d), and
   - determining (240), with at least one of the first assembly (10, 10a) and the at least one second assembly (10b, 10c, 10d), a location of the at least one magnetic object (20) based on the first and second collected magnetic field measurements.
61. The method (200) according to embodiment 60, wherein exchanging (230) comprises:
   - transmitting the collected first magnetic field measurements from the first assembly (10, 10a) to the at least one second assembly (10b, 10c, 10d), and/or
   - transmitting the collected second magnetic field measurements from the at least one second assembly (10b, 10c, 10d) to the first assembly (10, 10a).
62. The method (200) according to embodiment 60 or embodiment 61, wherein determining (240) a location of the at least one magnetic object (20) is further based on:
   first location data determined by the first assembly (10, 10a), wherein first location data is indicative of a location of the at least one magnetic object (20) relative to the first assembly (10, 10a), and/or
   second location data determined by the at least one second assembly (10b, 10c, 10d), wherein second location data is indicative of a location of the at least one magnetic object (20) relative to the at least one second assembly (10b, 10c, 10d).
63. The method (200) according to embodiment 62, wherein determining (240) a location of the at least one magnetic object (20) comprises:
   processing, with the first assembly (10, 10a), the first magnetic field measurements to first measurement data,
   determining, with the first assembly (10, 10a), first location data of the at least one magnetic object (20) based on the first measurement data, and
   transmitting the determined first location data from the first assembly (10, 10a) to the at least one second assembly (10b, 10c, 10d).
64. The method (200) according to embodiment 62 or embodiment 63, wherein determining (240) a location of the at least one magnetic object (20) comprises:
   processing, with the at least one second assembly (10b, 10c, 10d), the second magnetic field measurements to second measurement data,
   determining, with the at least one second assembly (10b, 10c, 10d), second location data of the at least one magnetic object (20) based on the second measurement data, and
   transmitting the determined second location data from the at least one second assembly (10b, 10c, 10d) to the first assembly (10, 10a).
65. The method (200) according to any one of embodiments 62 to 64, wherein determining (240) a location of the at least one magnetic object (20) comprises:
   tracking the first location data and/or the second location data over a time period,
   predicting a movement and/or trajectory of the at least one magnetic object (20) relative to the first assembly (10, 10a) and/or the at least one second assembly (10b, 10c, 10d) based on the tracked first location data and/or second location data, and
   exchanging the predicted movement and/or trajectory of the at least one magnetic object (20) between the first assembly (10, 10a) and the at least one second assembly (10b, 10c, 10d).
66. The method (200) according to any one of embodiments 60 to 65, wherein determining (240) a location of the at least one magnetic object (20) comprises:
   determining a distance between the at least one magnetic object (20) to the first assembly (10, 10a) and to the at least one second assembly (10b, 10c, 10d), and
   determining the location of the at least one magnetic object (20) with the assembly (10, 10a, 10b, 10c, 10d) which has the smallest distance to the at least one magnetic object (20).
67. The method (200) according to any one of embodiments 60 to 66, further comprising assuming a contact between the at least one magnetic object (20) or a user-borne device (2) comprising the at least one magnetic object (20) relative an interaction surface on which the at least one magnetic object (20) or the user-borne device (2) is operable based on the determined location.
68. The method (200) according to any one of embodiments 60 to 67, further comprising: representing (250) the at least one magnetic object (20) as virtual object on at least one output device (50) based on the determined location, more specifically wherein a movement of the virtual object on the at least one output device (50) is based on a virtual reproduction of the determined location of the at least one magnetic object (20), more specifically relative to the first assembly (10, 10a) and/or the at least one second assembly (10b, 10c, 10d)
69. The method (200) according to any one of embodiments 60 to 68, wherein the first assembly (10, 10a) and/or the second assembly (10, 10b) comprises a plurality of magnetometers (140, 150), and wherein the method (200) further comprises:
   calibrating (260) the first assembly (10, 10a) and/or the at least one second assembly (10, 10b) to determine a location and/or a distribution of the plurality of magnetometers (140, 150) relative to the first assembly (10, 10a) and/or to the second assembly (10, 10b),
   more specifically wherein the location includes a position and/or an orientation of the plurality of magnetometers (140, 150) relative to the first assembly (10, 10a) and/or to the second assembly (10, 10b).
70. The method (200) according to embodiment 69, wherein the first assembly (10, 10a) comprises a first plurality of magnetometers (140a), wherein calibrating (260) comprises:
   obtaining first assembly data associated with the first assembly (10, 10a), wherein first assembly data includes dimension data and/or a location data of at least one first sensing circuit board (130a) and/or at least one first connecting circuit board (120) relative to a first processing circuit board (1 10a), and
   determining, based on first assembly data, a location and/or a distribution of the first plurality of magnetometers (140) relative to the first assembly (10, 10a).
71. The method (200) according to embodiment 69 or embodiment 70, wherein the second assembly (10, 10a) comprises a second plurality of magnetometers (140), wherein calibrating (260) comprises:
   obtaining second assembly data associated with the second assembly (10, 10b), wherein second assembly data includes dimension data and/or a location data of at least one second sensing circuit board (130b) and/or at least one second connecting circuit board (120b) relative to a second processing circuit board (1 10b), and
   determining, based on second assembly data, a location and/or a distribution of the second plurality of magnetometers (140b) relative to the second assembly (10, 10b).
72. The method (200) according to embodiment 70 and embodiment 71, wherein calibrating (260) comprises:
   determining, based on first assembly data, a location and/or a distribution of the first plurality of magnetometers (140a) relative to the second assembly (10, 10b), and/or
   determining, based on second assembly data, a location and/or a distribution of the second plurality of magnetometers (140b) relative to the first assembly (10, 10a).
73. The method (200) according to any one of embodiments 69 to 72, wherein calibrating (260) comprises:
   obtaining location data associated with the first assembly (10, 10a) and the second assembly (10b) from a calibration device (40), wherein location data is indicative of a location of the first plurality of magnetometers (140a) relative to the first assembly (10, 10a) and of a location of the second plurality of magnetometers (140b) relative to the second assembly (10b), and
   determining, based on the obtained location data, a location of the first plurality of magnetometers (140a) relative to the second assembly (10b), and/or
   determining, based on the obtained location data, a location of the second plurality of magnetometers (140b) relative to the first assembly (10, 10b).
74. The method according to any one of embodiments 60 to 73, wherein the first assembly (10, 10a) and the at least one second assembly (10b, 10c, 10d) are of a system (1) for tracking and/or determining a location of at least one magnetic object (20), more specifically of a system (1) according to any one of embodiments 32 to 50.
75. The method (200) according to any one of embodiments 60 to 74, wherein the method (200) is a computer-implemented method.
76. A computer system configured to execute the computer-implemented method (200) according to embodiment 75.
77. A computer program configured to execute the computer-implemented method (200) according to embodiment 75.
78. A computer-readable medium or signal storing the computer program of embodiment 77.

**REFERENCE NUMERALS**

| | | | |
|---|---|---|---|
| X | first reference axis | c2 | length of second connecting circuit |
| Y | second reference axis | | board |
| Z | vertical reference axis | l1 | length of first sensing circuit board |
| x_{d} | first device axis | l2 | length of second sensing circuit board |
| y_{d} | second device axis | κ | angle |
| z_{d} | vertical device axis | 1 | system |
| E1 | first plane | 2 | user-borne device |
| E2 | second plane | 10 | assembly |
| M | sensing volume | 11 | assembly housing |
| PU | processing unit | 20 | magnetic object |
| AC | longitudinal axis of connecting circuit | 21 | magnetic moment vector |
| | board | 30 | data BUS element |
| AS | longitudinal axis of sensing circuit | 40 | calibration device |
| | board | 41 | optical calibration unit |
| t | horizontal time axis | 50 | output device |
| E | vertical error axis | 110 | processing circuit board |
| P1 | graph showing error over time | 120 | connecting circuit board |
| | without exchange | 130 | sensing circuit board |
| P2 | graph showing error over time with | 140 | magnetometer |
| | exchange | 150 | additional magnetometer |
| c1 | length of first connecting circuit board | U | user |

## Claims

1. An assembly (10) for tracking and/or determining a location of at least one magnetic object (20), comprising:
a processing circuit board (110),
at least one connecting circuit board (120), and
at least one sensing circuit board (130) comprising at least one magnetometer (140),
wherein the at least one connecting circuit board (120) is mechanically and communicatively coupled with the processing circuit board (110), and
wherein the at least one sensing circuit board (130) is mechanically and communicatively coupled with the at least one connecting circuit board (120).

2. The assembly (10) according to claim 1, wherein the at least one sensing circuit board (130) is mechanically and communicatively coupled with the processing circuit board (110) via the at least one connecting circuit board (120).

3. The assembly (10) according to claim 1 or claim 2, wherein the processing circuit board (110) comprises at least one processing unit (PU), wherein the at least one processing unit (PU) is configured to collect magnetic field measurements measured with the at least one magnetometer (140),
and more specifically wherein the at least one processing unit (PU) is configured to process the collected magnetic field measurements to track and/or determine a location of the at least one magnetic object (20).

4. The assembly (10) according to any one of the preceding claims, wherein the processing circuit board (110), the at least one connecting circuit board (120) and the at least one sensor circuit board (130) are arranged substantially in a common plane, or,
wherein the processing circuit board (110) and the at least one sensor circuit board (130) are arranged above or below the at least one connecting circuit board (120).

5. The assembly (10) according to any one of the preceding claims, wherein the at least one sensing circuit board (130) is coupled to a first side of the at least one connecting circuit board (120), and wherein the processing circuit board (110) is coupled to a second side of the at least one connecting circuit board (120) different than the first side.

6. The assembly (100) according to any one of the preceding claims, wherein the at least one connecting circuit board (120) comprises a first connecting circuit board (120a) and at least one second connecting circuit board (120b), wherein the first connecting circuit board (120a) is coupled to a first side of the processing circuit board (110), and wherein the at least one second connecting circuit board (120b) is coupled to a second side of the processing circuit board (110).

7. The assembly (10) according to any one of the preceding claims, wherein the at least one sensing circuit board (130) comprises a plurality of magnetometers (140), and wherein the at least one sensing circuit board (130) is arranged with respect to the at least one connecting circuit board (120) and the processing circuit board (110) such that the plurality of magnetometers (140) is distributed substantially uniformly over the entire assembly (10).

8. A system (1) for tracking and/or determining a location of at least one magnetic object (20), comprising:
a first assembly (10a) for tracking and/or determining a location of at least one magnetic object (20), and
at least one second assembly (10b, 10c, 10d) for tracking and/or determining a location of at least one magnetic object (20),
wherein at least one of the first assembly (10a) and the at least one second assembly (10b, 10c, 10d) is an assembly (10) according to any one of the preceding claims.

9. The system (1) according to claim 8, wherein a first processing circuit board (110a) of the first assembly (10, 10a) and a second processing circuit board (110b, 110c, 110d) of the at least one second assembly (10b, 10c, 10d) are communicatively coupled with each other.

10. The system (1) according to claim 9, wherein the first assembly (10, 10a) comprises at least one first magnetometer (140a) and wherein the at least one second assembly (10b) comprises at least one second magnetometer (140b), wherein each of the magnetometers (140a, 140b) is configured to measure a magnetic field created by at least one magnetic object (20),
wherein the first processing circuit board (110a) is configured to collect first magnetic field measurements measured with the at least one first magnetometer (140a) and wherein the at least one second processing circuit board (110b, 110c, 110d) is configured to collect second magnetic field measurements measured with the at least one second magnetometer (140b), and
wherein the first processing circuit board (110a) and/or the second processing circuit board (110b, 110c, 110d) is configured to transmit and/or receive the respective magnetic field measurements to and/or from the respective other one of the first processing circuit board (110a) and the second processing circuit board (110b, 110c, 110d).

11. The system (1) according to claim 10, wherein the first processing circuit board (110a) and/or second processing circuit board (1 10b) is configured to process the collected first and/or second magnetic field measurements,
wherein the first processing circuit board (110a) and/or second processing circuit board (110b) is configured to track and/or determine a location of the at least one magnetic object (20) based on the processed first and/or second magnetic field measurements, and more specifically wherein the first processing circuit board (110a) and/or the second processing circuit board (110b, 110c, 110d) is configured to transmit and/or receive the respective magnetic object location to and/or from the respective other one of the first processing circuit board (110a) and the second processing circuit board (110b, 110c, 110d).

12. A method (300) of assembling an assembly (10) for tracking and/or determining a location of at least one magnetic object (20), more specifically of the assembly (10) according to any one of claims 1 to 7, comprising:
a) providing (310) a processing circuit board (110), at least one connecting circuit board (120), and at least one sensing circuit board (130) comprising at least one magnetometer (140),
b) coupling (320), mechanically and communicatively, the at least one connecting circuit board (120) with the processing circuit board (110), and
c) coupling (330), mechanically and communicatively, the at least one sensing circuit board (130) with the at least one connecting circuit board (120).

13. A method (200) for tracking and/or determining a location of at least one magnetic object (20), comprising:
- collecting (210) first magnetic field measurements associated with a magnetic field created by at least one magnetic object (20) with a first assembly (10, 10a) for tracking and/or determining a location of at least one magnetic object (20),
- collecting (220) second magnetic field measurements associated with the magnetic field created by the at least one magnetic object (20) with at least one second assembly (10, 10a) for tracking and/or determining a location of at least one magnetic object (20),
more specifically wherein at least one of the first assembly (10, 10a) and the at least one second assembly (10b, 10c, 10d) is an assembly (10) according to any one of claims 1 to 7,
- exchanging (230) the collected magnetic field measurements between the first assembly (10, 10a) and the at least one second assembly (10b, 10c, 10d), and
- determining (240), with at least one of the first assembly (10, 10a) and the at least one second assembly (10b, 10c, 10d), a location of the at least one magnetic object (20) based on the first and second collected magnetic field measurements.

14. The method (200) according to claim 13, further comprising:
representing (250) the at least one magnetic object (20) as virtual object on at least one output device (50) based on the determined location, more specifically wherein a movement of the virtual object on the at least one output device (50) is based on a virtual reproduction of the determined location of the at least one magnetic object (20), more specifically relative to the first assembly (10, 10a) and/or the at least one second assembly (10b, 10c, 10d)

15. The method (200) according to claim 13 or claim 14, wherein the method (200) is a computer-implemented method.
